(19) Europäisches Patentamt
European Patent Office
Office européen des brevets

(11) Veröffentlichungsnummer: **0 013 936**
**B1**

(12) # EUROPÄISCHE PATENTSCHRIFT

(45) Veröffentlichungstag der Patentschrift: **22.09.82**

(21) Anmeldenummer: **80100201.5**

(22) Anmeldetag: **16.01.80**
**Die Akte enthält technische Angaben, die nach dem Eingang der Anmeldung eingereicht wurden und die nicht in dieser Patentschrift enthalten sind.**

(51) Int. Cl.³: **C 09 B 62/006**, C 07 C143/60, C 07 C143/72, D 06 P 3/66, D 06 P 3/10

(54) **Azoreaktivfarbstoffe sowie deren Herstellung und Verwendung zum Färben von Hydroxyl- und Amidgruppen enthaltenden Materialien.**

(30) Priorität: **26.01.79 DE 2903021**

(43) Veröffentlichungstag der Anmeldung: **06.08.80 (Patentblatt 80/16)**

(45) Bekanntmachung des Hinweises auf die Patenterteilung: **22.09.82 Patentblatt 82/38**

(84) Benannte Vertragsstaaten: **CH DE FR GB IT**

(56) Entgegenhaltungen:
**DE - A - 2 232 541**
**DE - A - 2 264 698**
**GB - A - 2 018 749**

(73) Patentinhaber: **BAYER AG**
**Zentralbereich Patente, Marken und Lizenzen**
**D-5090 Leverkusen 1, Bayerwerk (DE)**

(72) Erfinder: **Jäger, Horst, Dr.**
**Carl-Rumpff-Strasse 37**
**D-5090 Leverkusen (DE)**

**EP 0 013 936 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imprimerie Jouve, 18, rue St-Denis, 75001 Paris, France

# Azoreaktivfarbstoffe sowie deren Herstellung und Verwendung zum Färben von Hydroxyl- und Amidgruppen enthaltenden Materialien

Gegenstand der Erfindung sind neue Azoreaktivfarbstoffe, die der Formel I entsprechen :

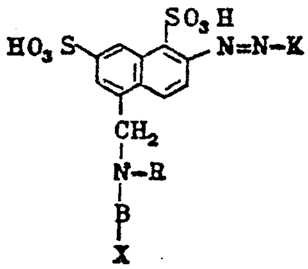

(I)

worin

R = Wasserstoff, $C_1$-$C_4$-Alkyl
B = direkte Bindung oder Brückenglied
X = Rest einer Reaktivkomponente
K = Rest einer Kupplungskomponente

sowie die Herstellung und Verwendung dieser Farbstoffe zum Färben und Bedrucken von stickstoff- bzw. hydroxylgruppenhaltigen Textilmaterialien.

Der Anmelder hat sich unter Bezugnahme auf folgende ältere Anmeldungen

1. DE 2 913 102 in DE
2. GB 2 018 749 in GB
3. CH 3 537 78 in CH und
4. FR 2 421 879 in FR

freiwillig eingeschränkt und gesonderte Ansprüche für die Vertragsstaaten DE, GB, CH und FR vorgelegt.

Geeignete Reste K sind beispielsweise solche von Kupplungskomponenten der Hydroxybenzol-, Aminobenzol-, Aminonaphthalin-, Hydroxynaphthalin-, Amino-hydroxynaphthalin-, Pyrazolon-, Aminopyrazol-, Acetessigsäurearylamid- und Pyridon-Reihe.

Die Reste K können für Azofarbstoffe übliche Substituenten enthalten, beispielsweise Sulfonsäure-, Carbonsäure-, gegebenenfalls substituierte Sulfonamid-, Sulfon-, Alkylamino-, Aralkyl-amino-, Arylamino-, Acylamino-, Nitro-, Cyan-, Hydroxy-, Alkoxy-, Azogruppen, Halogenatome wie Fluor, Chlor und Brom und dergleichen.

Beispiele für Brückenglieder B sind

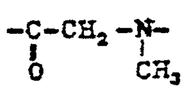 , 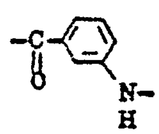 , 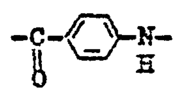 , 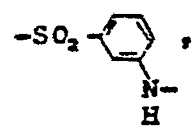 ,

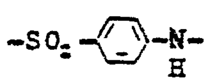 .

R steht bevorzugt für Wasserstoff.

Unter Reaktivgruppen X werden solche verstanden, die eine oder mehrere reaktive Gruppen oder abspaltbar Substituenten aufweisen, welche beim Aufbringen der Farbstoffe auf Cellulosematerialien in Gegenwart säurebindender Mittel und gegebenenfalls unter Einwirkung von Wärme mit den Hydroxylgruppen der Cellulose oder beim Aufbringen auf Superpolyamidfasern, wie Wolle, mit den NH-Gruppen dieser Fasern unter Ausbildung kovalenter Bindungen zu reagieren vermögen. Derartige faserreaktive Gruppierungen sind aus der Literatur in großer Zahl bekannt.

Erfindungsgemäß geeignete Reaktivgruppen, welche mindestens einen abspaltbaren Substituenten an einen heterocyclischen oder an einen aliphatischen Rest gebunden enthalten, sind unter anderem solche, die mindestens einen reaktiven Substituenten an einen 5- oder 6-gliedrigen heterocyclischen Ring gebunden enthalten, wie an einen Monazin-, Diazin-, Triazin-, z.B. Pyridin-, Pyrimidin-, Pyridazin-, Pyrazin-, Thiazin-, Oxazin- oder asymmetrischen oder symmetrischen Triazinring, oder an ein derartiges Ringsystem, welches einen oder mehrere ankondensierte aromatische Ringe aufweist, wie ein Chinolin-, Phthalazin-, Chinnolin-, Chinazolin-, Chinoxalin-, Acridin, Phenazin- und Phenanthridin-Ringsystem ; die 5- oder 6-gliedrigen heterocyclischen Ringe, welche mindestens einen reaktiven Substituenten aufweisen, sind demnach bevorzugt solche, die ein oder mehrere Stickstoffatome enthalten und 5- oder bevorzugt 6-gliedrige carbocyclische Ringe ankondensiert enthalten können.

Unter den reaktiven Substituenten am Heterocyclus sind beispielsweise zu erwähnen :

Halogen (Cl, Br oder F), Ammonium, einschließlich Hydrazinium, Sulfonium, Sulfonyl, Azido-($N_3$), Rhodanido, Thio, Thioläther, Oxyäther, Sulfinsäure und Sulfonsäure. Im einzelnen sind beispielsweise zu nennen :

Mono- oder Dihalogen-symmetrische-triazinylreste, z.B. 2,4-Dichlortriazinyl-6-, 2-Amino-4-chlortriazinyl-6-, 2-Alkylamino-4-chlortriazinyl-6-, wie 2-Methylamino-4-chlortriazinyl-6-, 2-Äthylamino- oder 2-Propylamino-4-chlortriazinyl-6-, 2-β-Oxäthylamino-4-chlortriazinyl-6-, 2-Di-β-oxäthylamino-4-chlortriazinyl-6- und die entsprechenden Schwefelsäurehalbester, 2-Diäthylamino-4-chlortriazinyl-6-, 2-Morpholino- oder 2-Piperidino-4-chlortriazinyl-6-, 2-Cyclohexylamino-4-chlortriazinyl-6-, 2-Arylamino- und substituiertes Arylamino-4-chlortriazinyl-6-, wie 2-Phenylamino-4-chlortriazinyl-6-, 2-(o-, m- oder p-Carboxy- oder Sulfophenyl)-amino-4-chlortriazinyl-6-, 2-Alkoxy-4-chlortriazinyl-6-, wie 2-Methoxy- oder Äthoxy-4-chlortriazinyl-6-, 2-(Phenylsulfonylmethoxy)-4-chlortriazinyl-6-, 2-Aryloxy und substituiertes Aryloxy-4-chlortriazinyl-6-, wie 2-Phenoxy-4-chlortriazinyl-6-, 2-(p-Sulfophenyl)-oxy-4-chlortriazinyl-6-, 2-(o-, m- oder p-Methyl- oder Methoxyphenyl)-oxy-4-chlor-triazinyl-6-, 2-Alkylmercapto- oder 2-Arylmercapto- oder 2-(substituiertes Aryl)-mercapto-4-chlortriazinyl-6-, wie 2-β-Hydroxyäthylmercapto-4-chlortriazinyl-6-, 2-Phenylmercapto-4-chlortriazinyl-6-, 3-(4'-Methylphenyl)-mercapto-4-chlortriazinyl-6-, 2-(2',4'-Dinitro)-phenylmercapto-4-chlortriazinyl-6-, 2-Methyl-4-chlortriazinyl-6-, 2-Phenyl-4-chlortriazinyl-6, 2,4-Difluortriazinyl-6, Monofluortriazinylreste, die durch Amino-, Alkylamino-, Aralkylamino, Acylaminogruppen substituiert sind, wobei Alkyl, insbesondere gegebenenfalls substituiertes $C_1$-$C_4$-Alkyl, Aralkyl, insbesondere gegebenenfalls substituiertes Phenyl-, $C_1$-$C_4$-Alkyl und Aryl, insbesondere gegebenenfalls durch Sulfo-, Alkyl-, insbesondere $C_1$-$C_4$-Alkyl, Alkoxy-, insbesondere $C_1-C_4$-Alkoxy, Carbonsäure-, Acylaminogruppen und Halogenatome wie Fluor, Chlor oder Brom substituiertes Phenyl oder Naphthyl bedeutet, beispielsweise 2-Amino-4-fluor-triazinyl-6, 2-Methylamino-4-fluor-triazinyl-6, 2-Ethylamino-4-fluor-triazinyl-6, 2-iso-Propylamino-4-fluor-triazinyl-6, 2-Dimethylamino-4-fluor-triazinyl-6, 2-Diethylamino-4-fluor-triazinyl-6, 2-β-Methoxy-ethylamino-4-fluor-triazinyl-6, 2-β-Hydroxyethylamino-4-fluor-triazinyl-6, 2-Di-(β-hydroxyethylamino)-4-fluortriazinyl-6, 2-β-Sulfoethylamino-4-fluor-triazinyl-6,

2-β-Sulfoethyl-methylamino-4-fluor-triazinyl-6,
2-Carboxymethylamino-4-fluor-triazinyl-6,
2-β-Cyanothylamino-4-fluor-triazinyl-6,
2-Benzylamino-4-fluor-triazinyl-6,
2-β-Phenylethylamino-4-fluor-triazinyl-6,
2-Benzyl-methylamino-4-fluor-triazinyl-6,
2-(x-Sulfo-benzyl)-amino-4-fluor-triazinyl-6,
2-Cyclohexylamino-4-fluor-triazinyl-6,
2-(o-, m-, p-Methylphenyl)-amino-4-fluor-triazinyl-6,
2-(o-, m-, p-Sulfophenyl)-amino-4-fluor-triazinyl-6,
2-(2',5'-Disulfophenyl)-amino-4-fluor-triazinyl-6,
2-(o-, m-, p-Chlorphenyl)-amino-4-fluor-triazinyl-6,
2-(o-, m-, p-Methoxyphenyl)-4-fluor-triazinyl-6,
2-(2'-Methyl-4'-sulfophenyl)-amino-4-fluor-triazinyl-6,
2-(2'-Methyl-5'-sulfophenyl)-amino-4-fluor-triazinyl-6,
2-2'-Chlor-4'-sulfophenyl)-amino-4-fluor-triazinyl-6,
2-(2'-Chlor-5'-sulfophenyl)-amino-4-fluor-triazinyl-6,
2-(2'-Methoxy-4'-sulfophenyl)-amino-4-fluor-triazinyl-6,
2-(o-, m-, p-Carboxyphenyl)-amino-4-fluor-triazinyl-6,
2-(2',4'-Disulfophenyl)-amino-4-fluor-triazinyl-6,
2-(3',5'-Disulfophenyl)-amino-4-fluor-triazinyl-6,
2-(2'-Carboxy-4-sulfophenyl)-amino-4-fluor-triazinyl-6,
2-(6'-Sulfonaphthyl-(2'))-amino-4-fluor-triazinyl-6,
2-(4',8'-Disulfonaphthyl-(2'))-amino-4-fluor-triazinyl-6,
2-(6',8'-Disulfonaphthyl-(2')-amino-4-fluor-triazinyl-6,
2-(N-Methylphenyl)-amino-4-fluor-triazinyl-6,
2-(N-ethylphenyl)-amino-4-fluor-triazinyl-6,
2-(N-β-Hydroxyethylphenyl)-amino-4-fluor-triazinyl-6,
2-N-iso-Propylphenyl)-amino-4-fluor-triazinyl-6,
2-Morpholino-4-fluor-triazinyl-6,
2-Piperidino-4-fluor-triazinyl-6,
2-(4',6',8'-Trisulfonaphthyl-(2'))-4-fluor-triazinyl-6,
2-(3',6',8'-Trisulfonaphthyl-(2'))-4-fluor-triazinyl-6,
2-(3',6'-Disulfonaphthyl-(1'))-4-fluor-triazinyl-6,

Mono-, Di- oder Trihalogenpyrimidinylreste, wie 2,4-Dichlorpyrimidinyl-6-, 2,4,5-Trichlorpyrimidinyl-6-, 2,4-Dichlor-5-nitro- oder -5-methyl- oder -5-carboxymethyl- oder -5-carboxy- oder -5-cyano- oder -5-vinyl- oder -5-sulfo- oder -5-mono- -die- oder -tri-chlormethyl- oder -5-carboalkoxy-pyrimidinyl-6-, 2,6-Dichlorpyrimidin-4-carbonyl-, 2,4-Dichlorpyrimidin-5-carbonyl-, 2-Chlor-4-methylpyrimidin-5-carbonyl-, 2-Methyl-4-chlorpyrimidin-5-carbonyl-, 2-Methylthio-4-fluorpyrimidin-5-carbonyl-, 6-Methyl-2,4-dichlorpyrimidin-5-carbonyl-, 2,4,6-Trichlorpyrimidin-5-carbonyl-, 2,4-Dichlorpyrimidin-5-sulfonyl-, 2-Chlorchinoxalin-3-carbonyl-, 2- oder 3-Monochlorchinoxalin-6-carbonyl-, 2- oder 3-Monochlorchinoxalin-6-sulfonyl-, 2,3-Dichlorchinocalin-6-carbonyl-, 2,3-Dichlorchinoxalin-6-sulfonyl-, 1,4-Dichlorphthalazin-6-sulfonyl- oder -6-carbonyl-, 2,4-Dichlorchinazolin-7- oder -6-sulfonyl- oder -carbonyl-, 2- oder 3- oder 4-(4',5'-Dichlorpyridazon-6'-yl-1')-phenylsulfonyl- oder carbonyl-, β-(4',5'-Dichlorpyridazon-6'-yl-1')-äthylcarbonyl-, N-Methyl-N-(2,4-Dichlortriazinyl-6-)-carbamyl-, N-Methyl-N-(2-methylamino-4-chlortriazinyl-6)-carbamyl-, N-Methyl-N-(2-dimethylamino-4-chlortriazinyl-6)-carbamyl-, N-Methyl- oder N-Äthyl-N-(2,4-dichlortriazinyl-6)-aminoacetyl-, N-Methyl-N-(2,3-dichlorchinoxalin-6-sulfonyl)-aminoacetyl-, N-Methyl-N-(2,3-dichlorchinoxalin-6-carbonyl)-aminoacetyl-, sowie die entsprechenden Brom- und Fluor-Derivate der oben erwähnten chlorsubstituierten heterocyclischen Reste, unter diesen beispielsweise 2-Fluor-4-pyrimidinyl-, 2,6-Difluor-4-pyrimidinyl-, 2,6-Difluor-5-chlor-4-pyrimidinyl, 2-Fluor-5,6-dichlor-4-pyrimidinyl-, 2,6-Difluor-5-methyl-4-pyrimidinyl-, 2,5-Difluor-6-methyl-4-pyrimidinyl-, 2-Fluor-5-methyl-6-chlor-4-pyrimidinyl-, 2-Fluor-5-nitro-6-chlor-4-pyrimidinyl-, 5-Brom-2-fluor-4-pyrimidinyl-, 2-Fluor-5-cyan-4-pyrimidinyl-, 2-Fluor-5-methyl-4-pyrimidinyl-, 2,5,6-Trifluor-4-pyrimidinyl-, 5-Chlor-6-chlormethyl-2-fluor-4-pyrimidinyl-, 2,6-Difluor-5-brom-4-pyrimidinyl-, 2-Fluor-5-brom-6-methyl-4-pyrimidinyl-, 2-Fluor-5-brom-6-chlormethyl-4-pyrimidinyl-, 2,6-Difluor-5-chlormethyl-4-pyrimidinyl-, 2,6-Difluor-5-nitro-4-pyrimidinyl-, 2-Fluor-6-methyl-4-pyrimidinyl-, 2-Fluor-5-chlor-6-methyl-4-pyrimidinyl-, 2-Fluor-5-chlor-4-pyrimidinyl-, 2-Fluor-6-chlor-4-pyrimidinyl-, 6-Trifluormethyl-5-chlor-2-fluor-4-pyrimidinyl-, 6-Trifluormethyl-2-fluor-4-pyrimidinyl-, 2-Fluor-5-nitro-4-pyrimidinyl-, 2-Fluor-5-trifluormethyl-4-pyrimidinyl-, 2-Fluor-5-phenyl- oder -5-methylsulfonyl-4-pyrimidinyl-, 2-Fluor-5-carbonamido-4-pyrimidinyl-, 2-Fluor-5-carbomethoxy-4-pyrimidinyl-, 2-Fluor-5-brom-6-trifluormethyl-4-pyrimidinyl-, 2-Fluor-6-carbonamido-4-pyrimidinyl-, 2-Fluor-6-carbomethoxy-4-pyrimidinyl-, 2-Fluor-6-phenyl-4-pyrimidinyl-, 2-Fluor-6-cyan-4-pyrimidinyl-, 2,6-Difluor-5-methylsulfonyl-4-pyrimidinyl-, 2-Fluor-5-sulfonamido-4-pyrimidinyl-, 2-Fluor-5-chlor-6-carbomethoxy-4-pyrimidinyl-, 2,6-Difluor-5-trifluormethyl-4-pyrimidinyl ; sulfonylgruppenhaltige Triazinreste, wie 2,4-Bis-(phenylsulfonyl)-triazinyl-6-, 2-(3'-Carboxyphenyl)-sulfonyl-4-chlortriazinyl-6-, 2-(3'-Sulfophenyl)-sulfonyl-4-chlortriazinyl-6-, 2,4-Bis-(3'-carboxyphenylsulfonyl)-triazinyl-6 ; sulfonylgruppenhaltige Pyrimidinringen, wie 2-Carboxymethhylsulfonyl-pyrimidinyl-4-, 2-Methylsulfonyl-6-methyl-pyrimidinyl-4-, 2-Methylsulfonyl-6-äthyl-pyrimidinyl-4-, 2-Phenylsulfonyl-5-chlor-6-methyl-pyrimidinyl-, 2,6-Bis-methylsulfonyl-pyrimidinyl-4-, 2,6-Bis-methylsulfonyl-5-chlor-pyrimidinyl-4-, 2,4-Bis-methylsulfonyl-pyrimidin-5-sulfonyl-, 2-Methylsulfonylpyrimidinyl-4, 2-Phenylsulfonyl-pyrimidinyl-4-, 2-Trichlor-methylsulfonyl-6-methyl-pyrimidinyl-4-, 2-Methylsulfonyl-5-chlor-6-methyl-pyrimidinyl-4-, 2-Methylsulfonyl-5-brom-6-methyl-pyrimidinyl-4-, 2-Methylsulfonyl-5-chlor-6-äthyl-pyrimidinyl-4-, 2-Methylsulfonyl-5-chlor-6-chlor-methyl-pyrimidinyl-4-, 2-Methylsulfonyl-4-chlor-6-methyl-pyrimidin-5-sulfonyl-, 2-Methylsulfonyl-5-nitro-6-methyl-pyrimidinyl-4-, 2,5,6-Tris-methylsulfonyl-pyrimidinyl-4-, 2-Methylsulfonyl-5,6-dimethyl-pyrimidinyl-4-, 2-Äthyl-sulfonyl-5-chlor-6-methyl-pyrimidinyl-4-, 2-Methyl-sulfonyl-6-chlor-pyrimidinyl-4-, 2,6-Bis-methylsulfonyl-5-chlor-pyrimidinyl-4-, 2-Methylsulfonyl-6-carboxy-pyrimidinyl-4-, 2-Methylsulfonyl-5-sulfo-pyrimidinyl-4-, 2-Methylsulfonyl-6-carbomethoxy-pyrimidinyl-4-, 2-Methylsulfonyl-5-carboxy-pyrimidinyl-4-, 2-Methylsulfonyl-5-cyan-6-methoxy-pyrimidinyl-4-, 2-Methylsulfonyl-5-chlor-pyrimidinyl-4-, 2-Sulfoäthylsulfonyl-6-methyl-pyrimidinyl-4-, 2-Methylsulfonyl-5-brom-pyrimidinyl-4-, 2-Phenyl-sulfonyl-5-chlor-pyrimidinyl-4-, 2-Carboxymethylsulfonyl-5-chlor-6-methyl-pyrimidinyl-4-, 2-Methylsulfonyl-6-chlorpyrimidin-4- und -5-carbonyl-, 2,6-Bis-(methyl-sulfonyl)-pyrimidin-4- oder -5-carbonyl-, 2-Äthylsulfonyl-6-chlorpyrimidin-5-carbonyl-, 2,4-Bis-(methylsulfonyl)-pyrimidin-5-sulfonyl-, 2-Methylsulfonyl-4-chlor-6-methyl-pyrimidin-5-sulfonyl- oder -carbonyl- ; ammoniumgruppenhaltige Triazinringe, wie Trimethylammonium-4-phenylamino- oder -4-(o-, m- oder p-sulfophenyl)-aminotriazinyl-6-, 2-(1,1-Diemthylhydrazinium)-4-phenylamino oder -4-(o-, m- oder p-sulfophenyl)-aminotriazinyl-6-, 2-(2-Isopropyliden-1,1-dimethyl)-hydrazinium-4-phenylamino- oder -4-(o-, m- oder p-sulfophenyl)-aminotriazinyl-6-, 2-N-Aminopyrrolidinium- oder 2-N-Aminopiperidinium-4-phenylamino- oder -4-(o-, m- oder p-sulfophenyl)-aminotriazinyl-6-, ferner 4-Phenylamino- oder 4-(sulfophenylamino)-triazinyl-6-Reste, die in 2-Stellung über eine Stickstoffbindung das 1,4-Bis-azabicyclo-[2,2,2]-octan oder das 1,2-Bis-aza-bicyclo-[0,3,3]-octan quartär gebunden enthalten, 2-Pyridinium-4-phenylamino- oder -4-(o-, m- oder p-sulfophenyl)-amino-triazinyl-6- sowie entsprechende 2-Oniumtriazinyl-6-Reste, die in 4-Stellung durch Alkylamino-, wie Methylamino-, Äthylamino- oder β-Hydroxyäthylamino-, oder Alkoxy-, wie Methoxy- oder Alkoxy-, oder Aroxy-, wie Phenoxy- oder Sulfophenoxy-Gruppen substituiert sind ; 2-Chlorbenzthiazol-5- oder -6-carbonyl- oder -5- oder -6-sulfonyl-, 2-Arylsulfonyl- oder -Alkylsulfonylbenzthiazol-5- oder -6-carbonyl- oder -5- oder -6-sulfonyl-, wie 2-Methyl-sulfonyl- oder 2-Äthylsulfonylbenzthiazol-5- oder -6-sulfonyl- oder -carbonyl-, 2-Phenylsulfonyl-benzthiazol-5- oder -6-sulfonyl- oder carbonyl- und die entsprechenden im ankondensierten Benzolring Sulfogruppen enthaltenden 2-Sulfonylbenzthiazol-5- oder -6-carbonyl- oder -sulfonyl-Derivate, 2-Chlorbenzoxazol-5- oder -6-carbonyl- oder -sulfonyl-, 2-Chlorbenzimidazol-5- oder -6-carbonyl- oder -sulfonyl-, 2-Chlor-1-methylbenzimidazol-5- oder -6-carbonyl- oder sulfonyl-, 2-Chlor-4-methylthiazol-(1,3)-5-carbonyl- oder -4- oder -5-sulfonyl-, N-Oxyd des 4-Chlor- oder 4-Nitrochinolin-5-carbonyl.

Desweiteren sind Reaktivgruppen der aliphatischen Reihe zu nennen, wie Acryloyl-, Mono-, Di- oder Trichloracryloyl-, wie $-CO-CH=CH-Cl$, $-CO-CCl=CH_2$, $-CO-CCl=CH-CH_3$, ferner $-CO-CCl=CH-COOH$, $-CO-CH=CCl-COOH$, β-Chlorpropionyl-, 3-Phenylsulfonylpropionyl-, 3-Methylsulfonylpropionyl-, β-Sulfato-äthylaminosulfonyl-, Vinylsulfonyl-, β-Chlor-äthylsulfonyl-, β-Sulfato-äthylsulfonyl-, β-Methylsulfonyl-äthylsulfonyl-, β-Phenylsulfonyläthylsulfonyl-, 2-Fluor-2-chlor-3,3-di-

fluorcyclobutan-1-carbonyl-, 2,2,3,3-Tetrafluorcyclobutan-carbonyl-1- oder sulfonyl-1-, β-(2,2,3,3-Tetrafluorcyclobutyl-1)-acryloyl-, α- oder β-Bromacryloyl-, α- oder β-Alkyl- oder Arylsulfonylacryloyl-Gruppe, wie α- oder β-Methylsulfonylacryloyl.

Bevorzugte Verbindungen im Rahmen der neuen Farbstoffe entsprechen den folgenden Formeln

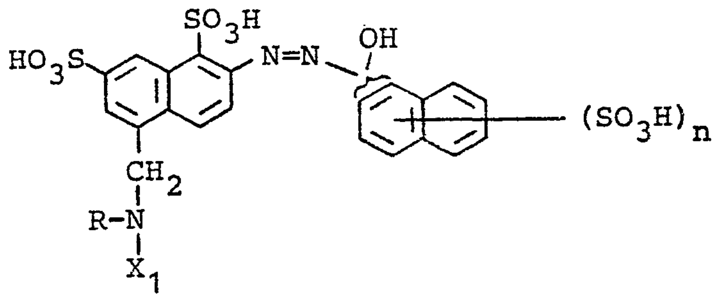

(II)

worin

R die angegebene Bedeutung hat,
$X_1$ = Rest einer Reaktivkomponente und
n für 1, 2 oder 3 steht ;

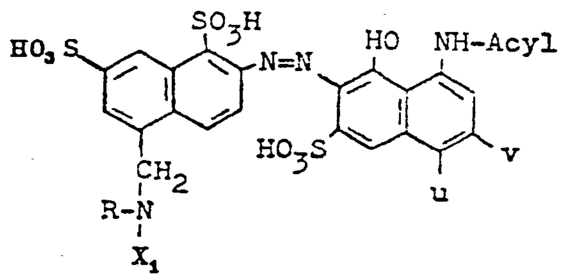

(III)

worin

R und $X_1$ die angegebene Bedeutung haben,
u und v für Wasserstoff oder für eine Sulfonsäuregruppe stehen, wobei $u \neq v$ und
Acyl für eine Acylgruppe, beispielsweise eine Alkylcarbonyl-, Alkylsulfonyl-, Arylcarbonyl- oder Arylsulfonylgruppe steht. Bevorzugte Alkylgruppen sind dabei solche mit 1-4 C-Atomen, bevorzugte Arylgruppen gegebenenfalls substituierte Phenylgruppen, beispielsweise gegebenenfalls durch Cl, $C_1$-$C_4$-Alkyl, $C_1$-$C_4$-Alkoxy substituierte Phenylgruppen. Weitere bevorzugte Farbstoffe sind solche der Formel

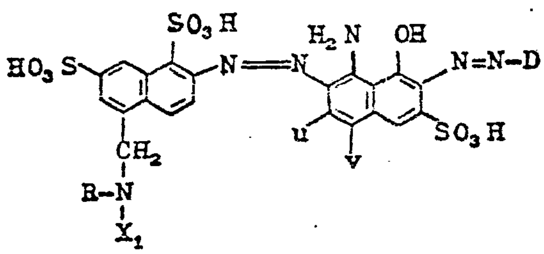

(IV)

worin

R, $X_1$, u und v die oben angegebene Bedeutung haben und D für den Rest eine Diazokomponente der Benzol- oder Naphthalinreihe steht sowie solche der Formel

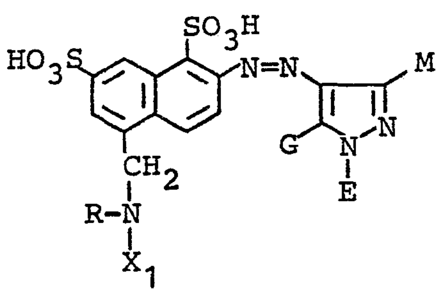

(V)

worin

R und $X_1$ die oben angegebene Bedeutung haben,
E für einen durch mindestens eine wasserlöslich machende Gruppe, insbesondere eine Sulfonsäuregruppe, substituierten Alkyl-, Phenyl- oder Naphthylrest,
M für eine Methyl-, Carboxy- oder Carbonamidgruppe und

G für eine OH- oder $NH_2$-Gruppe steht und solche der Formel

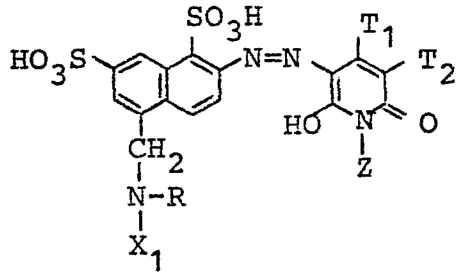

(VI)

worin

R und $X_1$ die angegebene Bedeutung haben,

$T_1$ = Wasserstoff, gegebenenfalls substituiertes Alkyl, Aralkyl, Cycloalkyl, Aryl, Heteroaryl, eine Gruppe der Formel —CN, —$CONR_1R_2$, —$COR_1$ oder —OH, wobei

$R_1$ und $R_2$ jeweils unabhängig voneinander Wasserstoff, gegebenenfalls substituiertes Alkyl, Aralkyl, Cycloalkyl, Aryl oder Heteroaryl bedeutet oder

die Gruppe —$NR_1R_2$ stellt den Rest einer fünf- oder sechsgliedrigen. heterocyclischen Ringverbindung dar,

$T_2$ = Wasserstoff, ggf. subst. Alkyl, Aralkyl, Cycloalkyl, Aryl, Hereroaryl, eine Sulfo-, eine Nitro-, eine Nitroso-, eine Alkylsulfonyl-, eine Arylsulfonyl- oder eine Acylaminogruppe, ein Halogenatom wie Chlor, Brom oder Fluor, eine Gruppe der Formel —CN, —$CONR_1R_2$, oder —$COR_1$,

Z = Wasserstoff, ggf. subst. Alkyl, Aralkyl, Cycloalkyl, Aryl oder Heteroaryl,

Die gegebenenfalls substituierten Alkylradikale, die durch $R_1$, $R_2$, $T_1$, $T_2$ und Z dargestellt werden, sind vorzugsweise gegebenenfalls substituierte $C_1$-$C_4$-Alkylradikale, spezielle Beispiele für solche Radikale sind : Methyl, Aethyl, n-Propyl und n-Butyl, β-Hydroxyäthyl, β-(Methoxy- oder Aethoxy)-äthyl, Cyanomethyl, Carbamoyl = methyl, Carbäthoxymethyl, Acetylmethyl und Sulfoalkyl.

Als Beispiele für Aralkylradikale, die durch Z, $T_1$, $T_2$, $R_1$ und $R_2$ dargestellt werden, sollen erwähnt werden : Benzyl und β-Phenyläthyl. Als Beispiel für ein Cycloalkylradikal, das durch Z, $T_1$, $T_2$, $R_1$ und $R_2$ dargestellt wird, soll Cyclohexyl erwähnt werden. Die gegebenenfalls substituierten Arylradikale, die durch Z, $T_1$, $T_2$, $R_1$ und $R_2$ dargestellt werden, sind vorzugsweise gegebenenfalls substituierte Phenylradikale ; spezielle Beispiele für solche Radikale sind Phenyl, Tolyl, Chlorophenyl, Carboxyphenyl, Methoxyphenyl und Sulfophenyl. Die gegebenenfalls substituierten heterocyclischen Radikale, die durch Z, $T_1$, $T_2$, $R_1$ und $R_2$ dargestellt werden, sind vorzugsweise gegebenenfalls substituierte 5- und 6-gliedrige heterocyclische Ringe ; als spezielle Beispiele für solche Radikale sollen erwähnt werden : 2-Pyridyl-, 2-Thiazolyl, 1-Piperindinyl und 1-Morpholinyl. Als Beispiele für 5- und 6-gliedrige stickstoffhaltige heterocyclische Ringe, die durch eine Verbindung von $R_1$, $R_2$ und dem Stickstoffatom gebildet werden, sollen erwähnt werden :

Piperidin, Morpholin, Piperazin und Pyrrolidin.

Aus der DE-A-2 232 541 sind ähnlich strukturierte Azoreaktivfarbstoffe bekannt, welche in der Diazokomponente nur eine Sulfonsäuregruppe enthalten.

Gegenstand der Erfindung sind weiterhin Verfahren zur Herstellung der Azofarbstoffe der Formel I. Im einzelnen seien folgende Verfahren genannt :

1. Amine der Formel

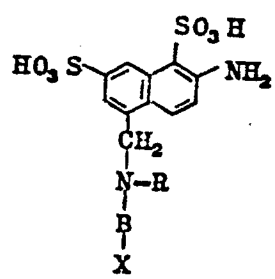

(VII)

worin

B, R und X die oben angegebene Bedeutung haben, werden diazotiert und mit Kupplungskomponenten der Formel H—K (VIII), worin

K die angegebene Bedeutung, hat, vereinigt.

2. Farbstoffe der Formel

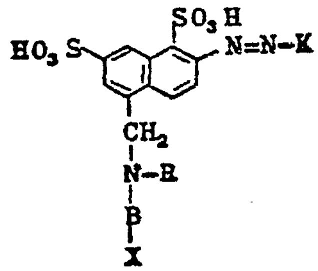

(IX)

worin

B, K und R die oben angegebene Bedeutung haben, werden mit einer Acylkomponente

Y—X (X)

worin

X die oben angegebene Bedeutung hat und

Y für eine abspaltbare Gruppe steht, unter Abspaltung von HY umgesetzt.

Amine der Formel VII werden hergestellt durch Kondensation von Aminen der Formel

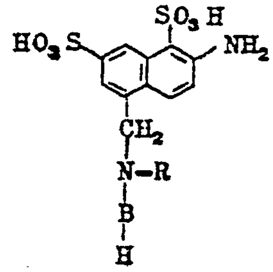

(XI)

worin

B und R die oben angegebene Bedeutung haben, mit Acylkomponenten der Formel X unter Abspaltung von HY.

Beispiele für Amine der Formel XI sind

2-Amino-1,7-disulfo-5-aminomethyl-naphthalin,
2-Amino-1,7-disulfo-5-N-methylaminomethyl-naphthalin,
2-Amino-1,7-disulfo-5-N-(3′-aminobenzoyl)-amino-methyl-naphthalin (hergestellt durch Kondensation von 2-Amino-1,7-disulfo-5-aminomethyl-naphthalin mit 3-Nitrobenzoylchlorid und anschließende Reduktion der Nitrogruppe).

Geeignete Azokomponenten (VIII) sind beispielsweise solche aus der Reihe der Aminobenzole, Aminonaphthaline, Hydroxynaphthaline, Amino-hydroxy-naphthaline, Acylamino-hydroxy-naphthaline, Arylamino-hydroxy-naphthaline, Pyrazolone, Aminopyrazole, Acetessigsäureamide und Pyridone. Aus der großen Zahl der hier zu nennenden Azokomponenten seien folgende auszugsweise genannt :

1-Amino-2-sulfo-5-acetylamino-benzol, 2-Amino-5,6- oder 7-sulfo-naphthalin, 2-Amino-5,7-disulfonaphthalin, 2-Amino-3,6-disulfo-naphthalin, 1-amino-6- oder 7-sulfo-naphthalin, 1-Amino-3-acetylaminobenzol, 1-Amino-3-ureido-benzol, 1-Amino-3-methyl-benzol, 1-Amino-3-methyl-6-methoxy-benzol, 1-Amino-2,5-dimethoxy-benzol, 1-Hydroxy-5-sulfo-naphthalin, 1-Hydroxy-3,6-disulfo-naphthalin, 1-Hydroxy-3,7-disulfonaphthalin, 1-Hydroxy-3,8-disulfo-naphthalin, 1-Hydroxy-4,6-disulfo-naphthalin, 1-Hydroxy-4,7-disulfo-naphthalin, 1-Hydroxy-4,8-disulfo-naphthalin, 1-Hydroxy-3,5-disulfo-naphthalin, 1-Hydroxy-8-benzoyl-amino-3,6-disulfo-naphthalin, 1-Hydroxy-8-benzoyl-amino-3,5-disulfo-naphthalin, 1-Hydroxy-8-ureido-3,6-disulfo-naphtalin, 1-Hydroxy-8-ureido-3,5-disulfo-naphthalin, 1-hydroxy-8-acetylamino-3,5-disulfo-naphthalin, 1-Hydroxy-8-acetylamino-3,6-disulfo-naphthalin, 1-Hydroxy-7-amino-3-sulfo-naphthalin, 1-Hydroxy-7-phenylamino-3-sulfo-naphthalin, 1-hydroxy-8-amino-3,6-disulfo-naphthalin, 1-Hydroxy-8-amino-3,5-disulfo-naphthalin, 1-Hydroxy-7-amino-3,6-disulfo-naphthalin, 1-Hydroxy-6-amino-3-sulfonaphthalin, 1-Hydroxy-6-amino-3,5-disulfo-naphthalin, 4-Sulfo-benzol- 1 azo 7 -8-amino-1-hydroxy-3,6-disulfo-naphthalin, 3-Sulfo-benzol- 1 azo 7 -8-amino-1-hydroxy-3,5-disulfo-naphthalin, 4-Nitro-2-sulfobenzol- 1 azo 7 -8-amino-1-hydroxy-3,6-disulfo-naphthalin, 1-(2′,3′- oder 4′-Sulfophenyl)-3-methyl-pyrazolon-5, 1-(2′-Chlor-4′- oder 5′-sulfo-phenyl)-3-methyl-pyrazolon-5, 1-(2′-Methyl-4′-sulfo-phenyl)-3-methyl-pyrazolon-5, 1-(2′-methyl-4′-sulfo-phenyl)-3-carboxy-pyrazolon-5, 1-β-Carboxy-äthyl-3-carboxy-pyrazolon-5.

1-(4′,8′-Disulfo-naphthyl-(2))-3-methyl-pyrazolon-5,
1-(5′,7′-Disulfo-naphtyl-(2))-3-methyl-pyrazolon-5,
1-(2′-Chlor-5′-sulfo-phenyl)-3-methyl-5-amino-pyrazol,

1-(2'-Chlor-4'-sulfo-phenyl)-3-methyl-5-amino-pyrazol,
1-(3' oder 4'-sulfo-phenyl)-3-methyl-5-amino-pyrazol,
1-Carboxy-methyl-3-methyl-pyrazolon-5, 1-β-Carboxyäthyl-3-methyl-pyrazolon-5, 1-β-Carboxyäthyl-3-methyl-5-amino-pyrazol,
1-(4'-Sulfo-phenyl)-3-carboxy-pyrazolon-5.

2,6-Dihydroxypyridin, 2,6-Dihydroxy-3-cyano-4-methyl-pyridin, 1-(Methyl- oder Äthyl)-3-cyano-4-methyl-6-hydroxypyridon-(2), 1-(β-Hydroxyäthyl- oder γ-methoxy-propyl)-3-amino-4-(methyl-phenyl- oder äthyl)-6-hydroxypyridon(2), 1-(Phenyl-, p-Tolyl- oder p-Anisyl)-3-cyano-4-(methyl- oder phenyl)-6-hydroxy-pyridon-(2), 1-Phenyl-3-(carbamoyl-, carboxy- oder carbäthoxy)-4-(methyl- oder phenyl)-6-hydroxypyridon-(2), 2,6-Dihydroxy-3-(carbamoyl-, carbäthoxy-, carbodiäthylamido)-4-methylpyridin, 2,6-Dihydroxy-3-(carbamoyl- oder carboäthoxy)-pyridin, 2,6-Dihydroxy-3-carbamoyl-4-phenyl-pyiridin, 2,6-Dihydroxy-3-cyano-4-carbamoyl-pyridin, 2,6-Dihydroxy-3-cyano-4-(carboxy-, carbomethoxy- oder carboäthoxy-)pyridin, Äthyl-2,6-dihydroxy-3-cyanopyrid-4-ylacetat, 2,6-Dihydroxy-3-cyanopyrid-4-ylacetamid, 2,6-Dihydroxy-3-cyanopyrid-4-ylacetamid, 2,6-Dihydroxy-3,4-di(carboxy- oder carboäthoxy)-pyridin, 2,6-Dihydroxy-3-carbamoyl-4-carboäthoxy-pyridin, 2,6-Dihydroxy-4-methylpyridin, Äthyl-2,6-dihydroxy-iso-nicotinat, 2,6-Dihydroxy-iso-nicotinamid, 2,6-Dihydroxy-iso-nicotinsäure-diäthylamid, 2,6-Dihydroxy-4-cyanopyridin, 2,6-Dihydroxy-4-phenylpyridin, 2,6-Dihydroxy-4-(p-hydroxyphenyl)-pyridin, 2,6-Dihydroxy-4-(p-methoxyphenyl)-pyridin, 2,4,6-Trihydroxy-pyridin, 2,6-Dihydroxy-3-cyano-4-äthoxycarbonylmethylpyridin, 4-Methyl-1-äthyl-3-carbamoyl-6-hydroxy-pyridon-(2) und 4-Methyl-1-phenyl-3-carbamoyl-6-hydroxypyrid-2-on, 1,4-Dimethyl-3-carbamoyl-6-hydroxy-pyridon-(2),

1-Äthyl-4-methyl-6-hydroxypyridon(2),
1-(β-Hydroxyäthyl)-4-methyl-6-hydroxy-pyridon(2),
1-Methyl-4-phenyl-6-hydroxy-pyridon(2),
1-Butyl-4-methyl-6-hydroxy-pyridon(2),
1-Äthyl-4-hexyl-6-hydroxy-pyridon(2),
1-Isopropyl-4-methyl-6-hydroxy-pyridon(2),
1-Äthyl-4-phenyl-6-hydroxy-pyridon(2),
1,4-Dimethyl-6-hydroxy-pyridon(2),
1-(β-Methoxyäthyl)-4-methyl-6-hydroxy-pyridon(2),
1-Propyl-4-methyl-6-hydroxy-pyridon(2),
1-(:-Methylaminoäthyl)-4-methyl-6-hydroxypyridon(2),
1-Äthyl-3-cyan-4-sulfomethyl-6-hydroxypyridon-(2),
1-Phenyl-3-cyan-4-sulfomethyl-6-hydroxypyridon-(2),
1-Methyl-3-aminocarbonyl-4-sulfomethyl-6-hydroxypyridon-(2),
1-Äthyl-4-sulfomethyl-6-hydroxypyridon-(2),
2,6-Dihydroxy-4-sulfomethyl-pyridin,
1-(2'-Acetylaminoäthyl)-3-cyan-4-sulfomethyl-6-hydroxypyridon-(2),
1-Benzyl-3-aminocarbonyl-4-sulfomethyl-6-hydroxypyridon-(2),
1-Methyl-3-chlor-4-sulfomethyl-6-hydroxypyridon-(2),
1-Isopropyl-3-cyan-4-sulfomethyl-6-hydroxypyridon-(2),
1-(2'-Hydroxyäthyl)-3-cyan-4-sulfomethyl-6-hydroxypyridon-(2),
1-(4'-Methoxyphenyl)-3-aminocarbonyl-4-sulfomethyl-6-hydroxypyridon-(2),
1-(2'-Chloräthyl)-3cyan-4-sulfomethyl-6-hydroxypyridon-(2),
1-Butyl-3-nitroso-4-sulfomethyl-6-hydroxypyridon-(2),
1-Äthyl-3-aminocarbonyl-4-sulfomethyl-6-hydroxypyridon-(2),
1-Methyl-4-sulfomethyl-6-hydroxypyridon-(2),
1-Äthyl-3-methylsulfony-4-sulfomethyl-6-hydroxypyridon-(2),
2,6-Dihydroxy-3-aminocarbonyl-4-sulfomethylpyridin,
3-Acetylamino-4-sulfomethyl-2,6-dihydroxypyridin,
1-Äthyl-3-nitro-4-sulfomethyl-6-hydroxypyridon-(2),
1-Isopropyl-3-chlor-4-sulfomethyl-6-hydroxypyridon-(2),
1-Äthyl-3-brom-4-sulfomethyl-6-hydroxypyridon-(2),
1-(4'-Chlorphenyl)-4-sulfomethyl-6-hydroxypyridon-(2),
1-(4'-Acetaminophenyl)-4-sulfomethyl-6-hydroxypyridon-(2),
1-Phenyl-3-aminocarbonyl-4-sulfomethyl-6-hydroxypyridon-(2),
1-Methyl-3-cyan-4-sulfomethyl-6-hydroxypyridon-(2);
2,6-Dihydroxy-3-cyan-4-sulfomethyl-pyridin,
1-Phenyl-3-acetylamino-4-sulfomethyl-6-hydroxypyridon-(2),
1-Benzyl-3-nitroso-4-sulfomethyl-6-hydroxypyridon-(2),
1-Äthyl-3-sulfo-4-methyl-6-hydroxypyridon-(2),
1-(β-Hydroxyäthyl)-3-sulfo-4-methyl-6-hydroxypyridon-(2),
1-Butyl-3-sulfo-4-methyl-6-hydroxypyridon-(2),
1-Isopropyl-3-sulfo-4-methyl-6-hydroxypyridon-(2),

1,4-Dimethyl-3-sulfo-6-hydroxypyridon-(2),
1-(β-Methoxyäthyl)-3-sulfo-4-methyl-6-hydroxypyridon-(2),
1-Propyl-3-sulfo-4-methyl-6-hydroxypyridon-(2),
3-Sulfo-4-methyl-2,6-dihydropyridin,
3-Sulfo-4-benzyl-2,6-dihydroxypyridin,
1-(4'-Chlorphenyl)-3-sulfo-4-methyl-6-hydroxypyridon-(2),
1-Äthyl-3-chlor-4-methyl-6-hydroxypyridon-(2),
1-(β-Hydroxyäthyl)-3-chlor-4-methyl-6-hydroxypyridon-(2),
1-methyl-3-brom-4-phenyl-6-hydroxypyridon-(2),
1-Butyl-3-fluor-4-methyl-6-hydroxypyridon-(2),
1-Äthyl-3-fluor-4-methyl-6-hydroxypyridon-(2),
1-Isopropyl-3-chlor-4-methyl-6-hydroxypyridon-(2),
1,4-Dimethyl-3-brom-6-hydroxypyridon-(2),
1-(β-Methoxyäthyl)-3-chlor-4-methyl-6-hydroxypyridon-(2),
1-Propyl-3-chlor-4-methyl-6-hydroxypyridon-(2),
1-(β-Aminoäthyl)-3-chlor-4-methyl-6-hydroxypyridon-(2),
1-(γ-Dimethylaminopropyl)-3-chlor-4-methyl-6-hydroxypyridon-(2),
3-Chlor-4-methyl-2,6-dihydroxypyridin,
3-Brom-4-benzyl-2,6-dihydroxypyridin,
1-Äthyl-3-sulfomethyl-4-methyl-6-hydroxypyridon-(2),
1-(β-Hydroxyäthyl)-3-sulfomethyl-4-methyl-6-hydroxypyridon-(2),
1-Methyl-3-sulfomethyl-4-phenyl-6-hydroxypyridon-(2),
1-Butyl-3-sulfomethyl-4-methyl-6-hydroxypyridon-(2),
1-Äthyl-3-α-sulfoäthyl-4-methyl-6-hydroxypyridon-(2),
1-Isopropyl-3-α-sulfoäthyl-4-methyl-6-hydroxypyridon-(2),
1,4-Dimethyl-3-sulfomethyl-6-hydroxypyridon-(2),
1-(β-methoxyäthyl)-3-sulfomethyl-4-methyl-6-hydroxypyridon-(2),
1-Propyl-3-sulfomethyl-4-methyl-6-hydroxypyridon-(2),
1-(β-Acetylaminoäthyl)-3-sulfomethyl-4-methyl-6-hydroxypyridon-(2),
1-(γ-Dimethylaminopropyl)-3-sulfomethyl-4-methyl-6-hydroxypyridon-(2),
3-Sulfomethyl-4-methyl-2,6-dihydroxypyridin,
3-Sulfomethyl-4-benzyl-2,6-dihydroxypyridin,
1-Äthyl-3-(α-phenyl)-sulfomethyl-4-benzyl-6-hydroxypyridon-(2),
1-Methyl-3-(α,4'-acetylaminophenyl)-sulfomethyl-4-methyl-6-hydroxypyridon-(2),

Enthalten die mit den genannten Azokomponenten erhältlichen Monoazofarbstoffe noch diazotierbare Aminogruppen, so können diese auch nach einem üblichen Verfahren diazotiert und erneut mit einer geeigneten Kupplungskomponente umgesetzt werden, wobei man zu Diazofarbstoffen gelangt.

Als Kupplungskomponente für die erneute Umsetzung mit dem diazotierten Monoazofarbstoff kann beispielsweise eine Verbindung aus der Reihe der bereits angeführten Azokomponenten VIII dienen.

Eine weitere Möglichkeit, Disazofarbstoffe der genannten Art aufzubauen, besteht darin, daß man Monoazofarbstoffe, die noch kupplungsfähige Stellen enthalten, darstellt, und diese dann mit geeigneten Diazokomponenten in einem zweiten Kupplungsschritt vereinigt, wobei man das erfindungsgemäß zu verwendende 2-Amino-1,7-di-sulfo-5-aminomethyl-naphthalin für den ersten oder zweiten Kupplungsschritt einsetzen kann. Als Azokomponenten, die zum Aufbau derartiger Monoazofarbstoffe dienen, werden vor allem solche aus der Reihe der Dihydroxy-benzole, Dihydroxynaphthaline und Aminohydroxynaphthaline verwendet. Außer den bereits erwähnten Komponenten seien als Beispiele noch 1,3-Dihydroxybenzol und 1,3-Dihydroxynapthalin-5,7-disulfonsäure genannt. Als Diazokomponente für den Aufbau derartiger Diazofarbstoffe können unter anderem verwendet werden : 1-Amino-4-sulfo-benzoyl, 1-Amino-3-sulfo-benzol, 1-Amino-2-chlor-5-sulfo-benzol, 1-Amino-2-sulfo-4-nitro-benzol, 1-Amino-2,5-disulfobenzol, 1-Amino-4-nitro-benzol, 1-Amino-4-methyl-sulfonyl-benzol, 2-Amino-4,8-disulfo-naphthalin, 2-Amino-6,8-disulfo-naphthalin.

Als Beispiele für Reaktivkomponenten der Formel X seien folgende genannt :

Trihalogen-symmetrische-triazine, wie Cyanurchlorid und Cyanurbromid, Dihalogen-monoamino- und monosubstituierte-aminosymmetrische triazine, wie 2,6-Dichlor-4-amino-triazin, 2,6-Dichlor-4-methylaminotriazin, 2,6-Dichlor-4-äthylaminotriazin, 2,6-Dichlor-4-oxäthylaminotriazin, 2,6-Dichlor-4-phenylaminotriazin, 2,6-Dichlor-4-(o-, m- oder p-sulfophenyl)-aminotriazin, 2,6-Dichlor-4-(2',3',2',4',3',4'-oder -3',5'-disulfophenyl)-aminotriazin; Dihalogen-alkoxy- und aryloxy-sym. triazine, wie 2,6-Dichlor-4-methoxytriazin, 2,6-Dichlor-4-äthoxytriazin, 2,6-Dichlor-4-phenoxytriazin, 2,6-Dichlor-4-(o-, m- oder p-sulfophenyl)-oxytriazin, Dihalogen-alkylmercapto- und -arylmercapto sym.-triazine, wie 2,6-Dichlor-4-äthylmercapto-triazin, 2,6-Dichlor-4-phenylmercaptotriazin, 2,6-Dichlor-4-(p-methylphenyl)-mercaptotriazin, 2,4,6-Trifluortriazin, 2,4-Difluor-6-(o-, m-, p-methyl-phenyl)-amino-triazin, 2,4-Difluor-6-(o-, m-, p-sulfophenyl)-amino-triazin, 2,4-Difluor-6-methoxy-triazin, 2,4-Difluor-6-(2',5'-disulfophenyl)-amino-triazin, 2,4-Difluor-6-(6'-sulfonaphthyl-2')-amino-triazin, 2,4-Difluor-6-(o-, m-, p-ethylphenyl)-amino-triazin, 2,4-Difluor-6-(o-, m-, p-chlorphenyl)-amino-triazin, 2,4-Difluor-6-(o-, m-, p-methoxyphenyl)-amino-triazin, 2,4-Difluor-6-(2'-methyl-5'-sulfophenyl)-amino-triazin, 2,4-Difluor-6-(2'-methyl-4'-sulfophenyl)-amino-triazin, 2,4-Difluor-6-(2'-chlor-4'-sulfophenyl)-amino-triazin, 2,4-Difluor-6-(2'-chlor-5'-sulfophenyl)-amino-triazin, 2,4-Difluor-6-(2'-methoxy-4'-sulfophenyl)-amino-triazin, 2,4-Difluor-6-(o-, m-, p-carboxyphenyl)-amino-triazin, 2,4-Difluor-6-(N-methyl-phenyl)-amino-triazin, 2,4-Difluor-6-(N-ethyl-phenyl)-amino-triazin, 2,4-Difluor-6-(N-isopropyl-phenyl)-amino-triazin, 2,4-Difluor-6-cyclohexylamino-triazin, 2,4-Difluor-6-morpholino-triazin, 2,4-Difluor-6-piperidino-triazin, 2,4-Difluor-6-benzylamino-triazin, 2,4-Difluor-6-N-methyl-benzylamino-triazin, 2,4-Difluor-6-β-phenylethyl-amino-triazin, 2,4-Difluor-6-(X-sulfo-benzyl)-amino-triazin, 2,4-Difluor-6-(2',4'-disulfophenyl)-amino-triazin, 2,4-Difluor-6-(3',5'-disulfophenyl)-amino-triazin, 2,4-Difluor-6-(2'-carboxy-4'-sulfo-phenyl)-amino-triazin, 2,4-Difluor-6-(2',5'-disulfo-4-methoxyphenyl)-amino-triazin, 2,4-Difluor-(2'-methyl-4',6'-disulfophenyl)-amino-triazin, 2,4-Difluor-(6',8'-disulfonaphthyl-(2'))-amino-triazin, 2,4-Difluor-(4',8'-disulfonaphthyl-(2'))-amino-triazin, 2,4-Difluor-(4',6',8'-trisulfo-naphthyl-(2'))-amino-triazin, 2,4-Difluor-(3',6',8'-trisulfonaphthyl-(2'))-amino-triazin, 2,4-Difluor-(3',6'-disulfonaphthyl-(1'))-amino-triazin, 2,4-Difluor-6-amino-triazin, 2,4-Difluor-6-methylamino-triazin, 2,4-Difluor-6-ethylamino-triazin, 2,4-Difluor-6-methoxyethoxy-triazin, 2,4-Difluor-6-methoxyethylamino-triazin, 2,4-Difluor-6-dimethylamino-triazin, 2,4-Difluor-6-diethylamino-triazin, 2,4-Difluor-6-iso-propylamino-triazin, Tetrahalogenpyrimidine, wie Tetrachlor-, Tetrabrom- oder Tetrafluor-pyrimidin, 2,4,6-Trihalogenpyrimidine, wie 2,4,6-Trichlor-, Tribrom- oder -Trifluor-pyrimidin, Dihalogenpyrimidine, wie 2,4-Dichlor-, -Dibrom- oder -Difluorpyrimidin ; 2,4,6-Trichlor-5-nitro- oder -5-methyl- oder -5-carbomethoxy- oder -5-carboäthoxy- oder -5-carboxymethyl- oder -5-mono-, -di- oder trichlormethyl- oder -5-carboxy- oder -5-sulfo- oder -5-cyano- oder -5-vinyl-pyrimidin, 2,4-Difluor-6-methylpyrimidin, 2,6-Difluor-4-methyl-5-chlopyrimidin, 2,4-Difluor-pyrimidin-5-äthylsulfon, 2,6-Difluor-4-chlorpyrimidin, 2,4,6-Trifluor-5-chlorpyrimidin, 2,6-Difluor-4-methyl-5-brompyrimidin, 2,4-Difluor-5,6-dichlor- oder -dibrompyrimidin, 4,6-Difluor-2,5-dichlor- oder -dibrompyrimidin, 2,6-Difluor-4-brompyrimidin, 2,4,6-Trifluor-5-brompyrimidin, 2,4,6-Trifluor-5-chlormethylpyrimidin, 2,4,6-Trifluor-5-nitropyrimidin, 2,4,6-Trifluor-5-cyanpyrimidin, 2,4,6-Trifluorpyrimidin-5-carbonsäurealkylester oder -5-carbonsäureamide, 2,6-Difluor-5-methyl-4-chlorpyrimidin, 2,6-Difluor-5-chlorpyrimidin, 2,4,6-Trifluor-5-methylpyrimidin, 2,4,5-Trifluor-6-methylpyrimidin, 2,4-Difluor-5-nitro-6-chlorpyrimidin, 2,4-Difluor-5-cyanpyrimidin, 2,4-Difluor-5-methylpyrimidin, 6-Trifluormethyl-5-chlro-2,4-difluorpyrimidin, 6-Phenyl-2,4-difluorpyrimidin, 6-Trifluoromethyl-2,4-difluorpyrimidin, 5-Trifluormethyl-2,4,6-trifluorpyrimidin, 2,4-Difluor-5-nitro-pyrimidin, 2,4-Difluor-5-trifluormethylpyrimidin, 2,4-Difluor-5-methylsulfonyl-pyrimidin, 2,4-Difluor-5-phenyl-pyrimidin, 2,4-Difluor-5-carbonamido-pyrimidin, 2,4-Difluor-5-carbomethoxy-pyrimidin, 2,4-Difluor-6-trifluormethylpyrimidin, 2,4-Difluor-6-carbonamido-pyrimidin, 2,4-Difluor-6-carbomethoxy-pyrimidin, 2,4-Difluor-6-phenyl-pyrimidin, 2,4-Difluor-6-cyanpyrimidin, 2,4,6-Trifluor-5-methylsulfonyl-pyrimidin, 2,4-Difluor-5-sulfonamido-pyrimidin, 2,4-Difluor-5-chlor-6-carbomethoxy-pyrimidin, 5-Trifluormethyl-2,4-difluorpyrimidin, 2,4-Dichlorpyrimidin-5-carbonsäurechlorid, 2,4,6-Trichlorpyrimidin-5-carbonsäurechlorid, 2-Methyl-4-chlorpyrimidin-5-carbonsäurechlorid, 2-Chlor-4-methylpyrimidin-5-carbonsäurechlorid, 2,6-Dichlorpyrimidin-4-carbonsäurechlorid ; Pyrimidin-Reaktivkomponenten mit abspaltbaren Sulfonylgruppen, wie 2-Carboxymethylsulfonyl-4-chlorpyrimidin, 2-Methylsulfonyl-4-chlor-6-methylpyrimidin, 2,4-Bis-methylsulfonyl-6-methylpyrimidin, 2,4-Bis-phenylsulfonyl-5-chlor-6-methylpyrimidin, 2,4,6-Trismethylsulfonylpyrimidin, 2,6-Bis-methylsulfonyl-4,5-dichlorpyrimidin, 2,4-Bis-methylsulfonylpyrimidin-5-sulfonsäurechlorid, 2-Methylsulfonyl-4-chlorpyrimidin, 2-Phenylsulfonyl-4-chlorpyrimidin, 2,4-Bis-trichlormethylsulfonyl-6-methylpyrimidin, 2,4-Bis-methylsulfonyl-5-chlor-6-methylpyrimidin, 2,4-Bis-methylsulfonyl-5-brom-6-methylpyrimidin, 2-Methylsulfonyl-4,5-dichlor-6-methylpyrimidin, 2-Methylsulfonyl-4,5-dichlor-6-chlormethylpyrimidin, 2-Methylsulfonyl-4-chlor-6-methylpyrimidin-5-sulfonsäurechlorid, 2-Methylsulfonyl-4-chlor-5-nitro-6-methylpyrimidin, 2,4,5,6-Tetramethylsulfonyl-pyrimidin 2-Methylsulfonyl-4-chlor-5,6-dimethylpyrimidin, 2-Äthylsulfonyl-4,5-dichlor-6-methylpyrimidin, 2-Methylsulfonyl-4,6-dichlorpyrimidin, 2,4,6-Tris-methylsulfonyl-5-chlorpyrimidin, 2-Methylsulfonyl-4-chlor-6-carboxypyrimidin, 2-Methylsulfonyl-4-chlorpyrimidin-5-sulfonsäure, 2-Methylsulfonyl-4-chlor-6-carbomethoxypyrimidin, 2-Methylsulfonyl-4-chlor-pyrimidin-5-carbonsäure, 2-Methylsulfonyl-4-chlor-5-cyan-6-methoxypyrimidin, 2-Methylsulfonyl-4,5-dichlorpyrimidin, 4,6-Bis-methylsulfonylpyrimidin, 4-Methylsulfonyl-6-chlorpyrimidin, 2-Sulfoäthylsulfonyl-4-chlor-6-methylpyrimidin, 2-Methylsulfonyl-4-chlor-5-brompyrimidin, 2-Methylsulfonyl-4-chlor-5-brom-6-methylpyrimidin, 2,4-Bis-methylsulfonyl-5-chlorpyrimidin, 2-Phenylsulfonyl-4,5-dichlorpyrimidin, 2-Phenylsulfonyl-4,5-dichlor-6-methylpyrimidin, 2-Carboxymethylsulfonyl-4,5-dichlor-6-methylpyrimidin, 2-(2'- oder 3'- oder 4'-Carboxyphenylsulfonyl)-4,5-dichlor-6-methylpyrimidin, 2,4-bis-(2'- oder 3'- oder 4'-Carboxyphenylsulfonyl)-5-chlor-6-methylpyrimidin, 2-Methylsulfonyl-6-chlorpyrimidin-4- oder -5-carbonsäurechlorid, 2-Äthylsulfonyl-6-chlorpyrimidin-4- oder -5-carbonsäurechlorid, 2,6-Bis-(methylsulfonyl)-pyrimidin-4-carbonsäurechlorid, 2-Methylsulfonyl-6-methyl-4-chlor- oder -4-brompyrimidin-5-carbonsäurechlorid oder -bromid, 2,6-Bis-(methylsulfonyl)-4-chlorpyrimidin-5-carbonsäurechlorid ; weitere Reaktivkomponenten der heterocyclischen Reihe mit reaktiven Sulfonylsubstituenten sind beispielsweise 3,6-Bis-phenylsulfonyl-pyridazin, 3-Methylsulfonyl-6-chlorpyridazin, 3,6-Bis-trichlormethylsulfonylpyridazin, 3,6-Bis-methylsulfonyl-4-methylpyridazin, 2,5,6-Tris-methylsulfonylpyrazin, 2,4-Bis-methylsulfonyl-1,3,5-triazin, 2,4-Bis-methylsulfonyl-6-(3'sulfophenylamino)-1,3,5-triazin, 2,4-Bis-methylsulfonyl-6-N-methylanilino-1,3,5-triazin, 2,4-Bis-methylsulfonyl-6-phenoxy-1,3,5-triazin, 2,4-Bis-methylsulfonyl-6-trichloräthoxy-1,3,5-triazin, 2,4,6-Trisphenylsulfonyl-1,3,5-triazin, 2,4-Bis-methylsulfonylchinazolin, 2,4-Bis-trichlormethylsulfonylchinolin, 2,4-Bis-carboxymethylsulfonylchinolin, 2,6-Bis-(methylsulfonyl)-pyridin-4-carbonsäurechlorid und 1-(4'-Chlorcarbonylphenyl oder 2'-chlorcarbonyläthyl)-4,5-bismethylsulfonyl-pyridazon-(6) ; weitere heterocyclische Reaktivkomponenten mit beweglichem Halogen sind unter anderem 2- oder 3-Monochlorchinoxalin-6-carbonsäurechlorid oder -6-sulfonsäurechlorid, 2- oder 3-Monobromchinoxalin-6-carbonsäurebromid oder -6-sulfonsäurebromid, 2,3-Dichlorchinoxalin-6-carbonsäurechlorid oder -6-sulfonsäurechlorid, 2,3-Dibromchinoxalin-6-carbonsäurebromid oder -6-sulfonsäurebromid, 1,4-Dichlorphthalazin-6-carbonsäurechlorid oder -6-sulfonsäurechlorid sowie die entsprechenden Bromverbindungen, 2,4-Dichlorchinazolin-6- oder -7-carbonsäurechlorid oder -7-sulfonsäurechlorid sowie die entsprechenden Bromverbindungen, 2- oder 3- oder 4-(4'-, 5'-Dichlorpyridazon-6'-yl-1')-phenylsulfonsäurechlorid oder -carbonsäurechlorid sowie die entsprechenden Bromverbindungen, β-(4',5'-Dichlorpyridazon-6'-yl-1')-äthylcarbonsäurechlorid, 2-Chlorchinoxalin-3-carbonsäurechlorid und die entsprechenden Bromverbindung, N-Methyl-N-(2,4-dichlortriazinyl-6)-carbamidsäurechlorid, N-Methyl-N-(2-chlor-4-methylamino-triazinyl-6)-carbamidsäurechlorid, N-Methyl-N-(2-chlor-4-dimethylamino-triazinyl-6)-carbamidsäurechlorid, N-Methyl- oder N-Äthyl-N-(2,4-dichlortriazinyl-6)-aminoacetylchlorid, N-Methyl-, N-Äthyl- oder N-Hydroxyäthyl-N-(2,3-dichlorchinoxalin-6-sulfonyl- oder -6-carbonyl)-aminoacetylchlorid und die entsprechenden Bromderivate, ferner 2-Chlorbenzthiazol-5- oder -6-carbonsäurechlorid oder -5- oder -6-sulfonsäurechlorid und die entsprechenden Bromverbindungen, 2-Arylsulfonyl- oder 2-Alkylsulfonyl-benzthiazol-5- oder -6-carbonsäurechlorid oder -5- oder -6-sulfonsäurechlorid, wie 2-Methylsulfonyl- oder 2-Äthyl-sulfonyl- oder 2-Phenylsulfonyl-benzthiazol-5- oder -6-sulfonsäurechlorid oder -5- oder -6-carbonsäurechlorid sowie die entsprechenden in ankondensierten Benzolring Sulfonsäuregruppen enthaltenden 2-Sulfonylbenzthiazol-Derivate, 3,5-Bis-methylsulfonyl-isothiazol-4-carbonsäurechlorid, 2-Chlor-benzoxazol-5- oder -6-carbonsäurechlorid oder -sulfonsäurechlorid sowie die entsprechenden Bromderivate, 2-Chlorbenzimidazol-5- oder -6-carbonsäurechlorid oder -sulfonsäurechlorid sowie die entsprechenden Bromderivate, 2-Chlor-1-methylbenzimidazol-5- oder -6-carbonsäurechlorid oder -sulfonsäurechlorid sowie die entsprechenden Bromderivate, 2-Chlor-4-methylthiazol-(1,3)-5-carbonsäurechlorid oder -4- oder -5-sulfonsäurechlorid, 2-Chlorthiazol-4- oder -5-sulfonsäurechlorid und die entsprechenden Bromderivate.

Aus der Reihe der aliphatischen Reaktivkomponenten sind beispielsweise zu erwähnen :

Acrylsäurechlorid, Mono-, Di- oder Trichlor-acrylsäurechlorid, 3-Chlorpropionsäurechlorid, 3-Phenylsulfonylpropionsäurechlorid, 3-Methylsulfonyl-propionsäurechlorid, 3-Äthyl-sulfonylpropionsäurechlorid, 3-Chloräthansulfochlorid, Chlormethansulfochlorid, 2-Chloracetylchlorid, 2,2,3,3-Tetrafluorcyclobutan-1-carbonsäurechlorid, β-(2,2,3,3-Tetrafluorcyclobutyl-1)-acrylsäurechlorid, β-(2,3,3-Trifluor-2-chlorcyclobutan-1)-carbonsäurechlorid, β-Methylsulfonyl-acrylsäurechlorid, α-Methylsulfonyl-acrylsäurechlorid und α-Bromactylsäurechlorid und β-Bromacrylsäurechlorid.

Führt die Umwandlung zu Farbstoffen, die mehr als eine reaktive Gruppe im Rest X oder an anderer Stelle des Farbstoffmoleküls aufweisen, so können diese teilweise durch andere Reste, beispielsweise Aminoreste ersetzt werden, die ihrerseits reaktive Gruppe, z.B. in Form veresterter Oxalkylgruppen, aufweisen können. Grundsätzlich ist die Answesenheit zweier oder mehrerer voneinander verschiedener Reaktivgruppen im Farbstoff möglich. Die neuen Farbstoffe der Formel (I) eignen sich zum Färben und Bedrucken von Hydroxyl- oder Amidgruppen enthaltenden Materialien, wie Textilfasern-, Fäden und Geweben aus Wolle, Seide, synthetischen Polyamid-, und Polyurethanfasern und zum waschechten Färben und Bedrucken von nativer oder regenerierter Cellulose, wobei die Behandlung von Cellulosematerialien zweckmäßigerweise in Gegenwart säurebindender Mittel und gegebenenfalls durch Hitzeeinwirkung nach den für Reaktivfarbstoffe bekanntgewordenen Verfahren erfolgt.

Die angegebenen Formeln sind die der entsprechenden freien Säuren. Die Farbstoffe wurden im allgemeinen in Form der Alkalisalze, insbesondere der Na-Salze isoliert und zum Färben eingesetzt.

Die in den Beispielen genannten Gewichte beziehen sich auf die freie Säure.

## Beispiel 1

252 g 5-Aminomethyltobiassäure werden in 400 ml 20 %iges Oleum eingetragen. Anschließend tropft man 260 ml 65 %iges Oleum ein, wobei man die Temperatur nicht über 70° ansteigen läßt. Man hält die Temperatur 3 Stunden bei 70°. Nach dem Abkühlen auf Raumtemperatur trägt man auf 4 Kg Eis aus. Nach kurzem Rühren saugt man ab. Zur Reinigung wird der Rückstand in 4 Ltr. Wasser mit konz. Natronlauge bei pH 11-12 gelöst. Die Lösung wird mit A-Kohle geklärt und aus dem Filtrat das Sulfierungsprodukt durch Ansäuern auf pH 1 abgeschieden. Die Elementaranalyse des getrockneten Produktes ergibt für C, N und S ein Atomverhältnis von 11 : 2 : 2. Die Stellung der neu eingetretenen Sulfogruppe resultiert aus dem KR-Spektrum.

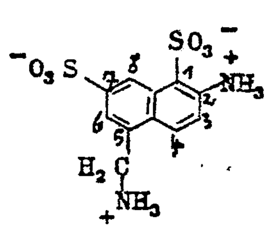

NMR-Spektrum aufgenommen mit einem Gerät Varan A 60 (60 MHz) Lösungsmittel : $D_2$ O/Na OD

δ = 3.90 (s, $CH_2$ an C-5), 6.92 (d, H an C-3, $J_{3,4}$ = 9.4 Hz), 7.54 (d/d, H an C-4, $J_{4,3}$ = 9.4 Hz, $J_{4,8}$ = 0,7 Hz), 7.64 (d, H an C-6, $J_{6,8}$ = 1.5 Hz), 9.19 ppm (d/d, H an C-8, $J_{8,4}$ = 0.7 Hz, $J_{8,6}$ = 1.5 Hz).

Die obige Formel ist die des inneren Salzes, wie es bei der sauren Isolierung anfällt. Durch Zusatz von Alkalien erhält man die entsprechenden Mono- oder Di-Alkalisalze, beispielsweise Na- oder K-Salze.

## Beispiel 2

33,2 g 2-Amino-5-aminomethyl-1,7-disulfo-naphthalin werden in 280 ml Wasser unter Zusatz von 14 ml konz. Natronlauge gelöst. Diese alkalische Lösung versetzt man mit 7 g Natriumnitrit und läßt sie in eine Vorlage aus 35 ml konz. Salzsäure und 400 ml Eiswasser einlaufen. Nach beendigter Diazotierung entfernt man den Ueberschuß an Nitrit mit Amidosulfonsäure und gibt die Suspension anteilweise in eine Mischung aus 28 g Natriumhydrogencarbonat und 19,6 g 1-Ethyl-3-carbamoyl-4-methyl-6-hydroxypyridon-(2) in 300 ml Wasser. Wenn die Kupplung beendet ist, kühlt man durch Einwerfen von Eis die Temperatur auf 12° ab und tropft 16,9 g 2,4,6-Trifluor-5-chlor-pyrimidin ein, wobei durch gleichzeitige Zugabe von verdünnter Natronlauge ein pH von 8,5 eingehalten wird. Aus der klaren Lösung wird der fertig acylierte Farbstoff durch Aussalzen abgeschieden, abgesaugt, getrocknet und gemahlen. Es resultiert ein gelbes Farbstoffpulver, das sich leicht in Wasser mit gelber Farbe löst.

Der Farbstoff entspricht der Formel

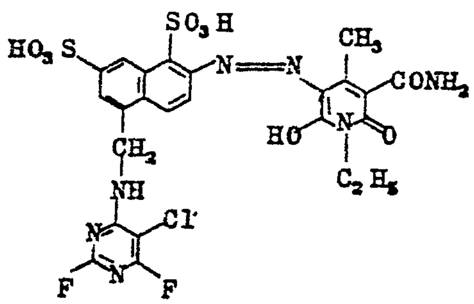

## Anwendungsbeispiele

### Färbevorschrift

In einem Färbebecher von 300 ml Inhalt, der sich in einem beheizbaren Wasserbad befindet, werden 168 ml Wasser von 20-25 °C vorgelegt. Man teigt 0,3 g des nach Beispiel 1 erhaltenen Farbstoffs mit 2 ml kaltem Wasser gut an und fügt 30 ml heißes Wasser (70°) zu ; dabei löst sich der Farbstoff auf. Die Farbstofflösung wird dem vorgelegten Wasser zugegeben und 10 g Baumwollgarn in dieser Färbeflotte ständig in Bewegung gehalten. Innerhalb von 10 Minuten erhöhte man die Temperatur der Färbeflotte auf 40 °C-50 °C, setzt 10 g wasserfreies Natriumsulfat zu und färbt 30 Minuten weiter. Dann fügt man der Färbeflotte 4 g wasserfreies Natriumcarbonat zu und färbt 60 Minuten bei 40-50 °C. Man entnimmt dann das gefärbte Material der Färbeflotte, entfernt die anhaftende. Flotte durch Auswringen oder Abpressen und spült das Material zunächst mit kalten Wasser und dann mit heißem Wasser so lange, bis die Spülflotte nicht mehr angeblutet wird. Anschließend wird das gefärbte Material in 200 ml einer Flotte, die 0,2 g Natriumalkylsulfat enthält, während 20 Minuten bei Siedetemperatur geseift, erneut gespült und bei 60-70 °C in einem Trockenschrank getrocknet. Man erhält ein brillantes grünstichiges Gelb von hervorragenden Wasch- und Lichtechtheiten.

### Klotzvorschrift

30 Teile des nach Beispiel 1 dargestellten Farbstoffs werden in 1000 Teile Wasser gelöst. Mit dieser Lösung wird ein Baumwollgewebe fouladiert und bis zu einer Gewichtsabnahme von 90 % abgepreßt. Die noch feuchte Baumwolle wird bei 70 °C während 30 Minuten in einem Bad, welches in 1000 Teilen Wasser 200 Teile kalziniertes Natriumsulfat und 10 Teile kalziniertes Natriumcarbonat gelöst enthält, behandelt. Anschließend wird die Färbung in üblicher Weise fertiggestellt. Man erhält ein brillantes grünstichiges Gelb mit vorzüglichen Naß- und Lichtechtheiten.

### Druckvorschrift

Wenn man Baumwollnessel mit einer Druckpaste bedruckt, die im Kilogramm 20 g des nach

Beispiel 1 dargestellten Farbstoffs, 100 g Harnstoff, 300 ml Wasser, 500 g Alginatverdickung (60 g Natriumalginat/kg Verdickung) und 10 g Soda enthält und die mit Wasser auf 1 kg aufgefüllt wurde, trocknet, 1 Minute bei 103 °C dämpft, mit heißem Wasser spült und kochend seift, so erhält man einen klaren stark grünstichig gelben Druck von guter Naß- und Lichtechtheit.

Wenn man nach den Angaben dieses Beispiels verfährt, jedoch anstelle von 2,4,6-Trifluor-5-chlorpyrimidin eine äquivalente Menge des in Spalte 2 aufgeführten Reaktivkomponenten und anstelle von 1-Ethyl-3-carbamoyl-4-methyl-6-hydroxypyridon-(2) eine äquivalente Menge des in Spalte 3 aufgezählten Kupplungskomponenten verwendet und die Temperatur für die Kondensation mit der Reaktivkomponente so wählt, wie sie aus der Literatur bekannt ist, so resultieren gleichfalls wertvolle Reaktivfarbstoffe, die Baumwolle nach einem der aufgeführten Verfahren in einem der in Spalte 4 genannten Töne färben.

(Siehe Beispielen nach folgenden Seiten)

| Beispiel | Reaktivkomponente | Kupplungskomponente | Farbton |
|---|---|---|---|
| 3 | 2,4,6-Trichlortriazin | 1-Ethyl-3-carbamoyl-4-methyl-6-hydroxy-pyridon-(2) | grünstichig Gelb |
| 4 | 2,4,6-Trichlorpyrimidin | " | " |
| 5 | 2,4,6-Trichlor-5-methylsulfonyl-pyrimidin | " | " |
| 6 | 2,4,5,6-Tetrachlor-pyrimidin | " | " |
| 7 | 2-Methylsulfonyl-4,5-dichlor-6-methyl-pyrimidin | " | " |
| 8 | 2-Amino-4,6-difluor-triazin | " | " |
| 9 | 2-Methylamino-4,6-difluor-triazin | " | " |
| 10 | 2-Phenylamino-4,6-difluor-triazin | " | " |
| 11 | 2-(3'-Sulfophenylamino)-4,6-difluor-triazin | " | " |
| 12 | 2-(4'-Sulfophenylamino)-4,6-difluor-triazin | " | " |
| 13 | 2-(2'-Methyl-5'-sulfophenyl-amino)-4,6-difluortriazin | " | " |
| 14 | 2-(2'-chlor-4'-sulfophenyl-amino)-4,6-difluortriazin | " | " |

| Beispiel | Reaktivkomponente | Kupplungskomponente | Farbton |
|---|---|---|---|
| 15 | 2-(6'-Sulfonaphthyl-2'-amino)-4,6-difluortriazin | 1-Ethyl-3-carbamoyl-4-methyl-6-hydroxy-pyridon-(2) | grünstichig Gelb |
| 16 | 2-Methoxyethoxy-4,6-difluor-triazin | " | " |
| 17 | 2-Amino-4,6-dichlor-triazin | " | " |
| 18 | 2-Methylamino-4,6-dichlor-triazin | " | " |
| 19 | 2-Phenylamino-4,6-dichlor-triazin | " | " |
| 20 | 2-(3'-Sulfophenylamino)-4,6-dichlortriazin | " | " |
| 21 | 2-(4'-Sulfophenylamino)-4,6-dichlortriazin | " | " |
| 22 | 2-(2'-Methyl-5'-sulfophenyl-amino)-4,6-dichlor-triazin | " | " |
| 23 | 2-N-Methylphenylamino-4,6-dichlortriazin | " | " |
| 24 | 2,3-Dichlorchinoxalin-6-car=bonsäurechlorid | " | " |

| Beispiel | Reaktivkomponente | Kupplungskomponente | Farbton |
|---|---|---|---|
| 25 | 2,4,6-Trifluor-5-chlor-pyrimidin | 1-Ethyl-3-sulfomethyl-4-methyl-6-hydroxy-pyridon-(2) | grünstichig Gelb |
| 26 | 2,4,6-Trichlortriazin | " | " |
| 27 | 2,4,6-Trichlorpyrimidin | " | " |
| 28 | 2,4,6-Trichlor-5-methylsulfonyl-pyrimidin | " | " |
| 29 | 2,4,5,6-Tetrachlor-pyrimidin | " | " |
| 30 | 2-Methylsulfonyl-4,5-dichlor-6-methyl-pyrimidin | " | " |
| 31 | 2-Amino-4,6-difluor-triazin | " | " |
| 32 | 2-Methylamino-4,6-difluor-triazin | " | " |
| 33 | 2-Phenylamino-4,6-difluor-triazin | " | " |
| 34 | 2-(3'-Sulfophenylamino)-4,6-difluor-triazin | " | " |
| 35 | 2-(4'-Sulfophenylamino)-4,6-difluor-triazin | " | " |
| 36 | 2-(2'-Methyl-5'-sulfophenyl-amino)-4,6-difluortriazin | " | " |
| 37 | 2-(2'-chlor-4'-sulfophenyl-amino)-4,6-difluortriazin | " | " |

| Beispiel | Reaktivkomponente | Kupplungskomponente | Farbton |
|---|---|---|---|
| 38 | 2-(6'-Sulfonaphthyl-2'-amino)-4,6-difluortriazin | 1-Ethyl-3-**sulfomethyl-4-methyl-6-hydroxy-pyridon-(2)** | grünstichig Gelb |
| 39 | 2-Methoxyethoxy-4,6-difluor-triazin | " | " |
| 40 | 2-Amino-4,6-dichlor-triazin | " | " |
| 41 | 2-Methylamino-4,6-dichlor-triazin | " | " |
| 42 | 2-Phenylamino-4,6-dichlor-triazin | " | " |
| 43 | 2-(3'-Sulfophenylamino)-4,6-dichlortriazin | " | " |
| 44 | 2-(4'-Sulfophenylamino)-4,6-dichlortriazin | " | " |
| 45 | 2-(2'-Methyl-5'-sulfophenyl-amino)-4,6-dichlor-triazin | " | " |
| 46 | 2-N-Methylphenylamino-4,6-dichlortriazin | " | " |
| 47 | 2,3-Dichlorchinoxalin-6-car=bonsäurechlorid | " | " |

| Beispiel | Reaktivkomponente | Kupplungskomponente | Farbton |
|---|---|---|---|
| 48 | 2,4,6-Trifluor-5-chlor-pyrimidin | 1-(2'-Chlor-4'-sulfophenyl)-3-methyl-pyrazolon-5 | Gelb |
| 49 | 2,4,6-Trichlortriazin | " | " |
| 50 | 2,4,6-Trichlorpyrimidin | " | " |
| 51 | 2,4,6-Trichlor-5-methylsulfonyl-pyrimidin | " | " |
| 52 | 2,4,5,6-Tetrachlor-pyrimidin | " | " |
| 53 | 2-Methylsulfonyl-4,5-dichlor-6-methyl-pyrimidin | " | " |
| 54 | 2-Amino-4,6-difluor-triazin | " | " |
| 55 | 2-Methylamino-4,6-difluor-triazin | " | " |
| 56 | 2-Phenylamino-4,6-difluor-triazin | " | " |
| 57 | 2-(3'-Sulfophenylamino)-4,6-difluor-triazin | " | " |
| 58 | 2-(4'-Sulfophenylamino)-4,6-difluor-triazin | " | " |
| 59 | 2-(2'-Methyl-5'-sulfophenyl-amino)-4,6-difluortriazin | " | " |
| 60 | 2-(2'-chlor-4'-sulfophenyl-amino)-4,6-difluortriazin | " | " |

| Beispiel | Reaktivkomponente | Kupplungskomponente | Farbton |
|---|---|---|---|
| 61 | 2-(6'-Sulfonaphthyl-2'-amino)-4,6-difluortriazin | 1-(2'-Chlor-4'-sulfophenyl)-3-methyl-pyrazolon-5 | Gelb |
| 62 | 2-Methoxyethoxy-4,6-difluor-triazin | " | " |
| 63 | 2-Amino-4,6-dichlor-triazin | " | " |
| 64 | 2-Methylamino-4,6-dichlor-triazin | " | " |
| 65 | 2-Phenylamino-4,6-dichlor-triazin | " | " |
| 66 | 2-(3'-Sulfophenylamino)-4,6-dichlortriazin | " | " |
| 67 | 2-(4'-Sulfophenylamino)-4,6-dichlortriazin | " | " |
| 68 | 2-(2'-Methyl-5'-sulfophenyl-amino)-4,6-dichlor-triazin | " | " |
| 69 | 2-N-Methylphenylamino-4,6-dichlortriazin | " | " |
| 70 | 2,3-Dichlorchinoxalin-6-car=bonsäurechlorid | " | " |

| Beispiel | Reaktivkomponente | Kupplungskomponente | Farbton |
|---|---|---|---|
| 71 | 2,4,6-Trifluor-5-chlor-pyrimidin | 1-(2'-Methyl-4'-sulfophenyl)-3-methyl-pyrazolon-5 | Gelb |
| 72 | 2,4,6-Trichlortriazin | " | " |
| 73 | 2,4,6-Trichlorpyrimidin | " | " |
| 74 | 2,4,6-Trichlor-5-methylsulfonyl-pyrimidin | " | " |
| 75 | 2,4,5,6-Tetrachlor-pyrimidin | " | " |
| 76 | 2-Methylsulfonyl-4,5-dichlor-6-methyl-pyrimidin | " | " |
| 77 | 2-Amino-4,6-difluor-triazin | " | " |
| 78 | 2-Methylamino-4,6-difluor-triazin | " | " |
| 79 | 2-Phenylamino-4,6-difluor-triazin | " | " |
| 80 | 2-(3'-Sulfophenylamino)-4,6-difluor-triazin | " | " |
| 81 | 2-(4'-Sulfophenylamino)-4,6-difluor-triazin | " | " |
| 82 | 2-(2'-Methyl-5'-sulfophenyl-amino)-4,6-difluortriazin | " | " |
| 83 | 2-(2'-chlor-4'-sulfophenyl-amino)-4,6-difluortriazin | " | " |

| Beispiel | Reaktivkomponente | Kupplungskomponente | Farbton |
|---|---|---|---|
| 84 | 2-(6'-Sulfonaphthyl-2'-amino)-4,6-difluortriazin | 1-(2'-Methyl-4'-sulfophenyl)-3-methyl-pyrazolon-5 | Gelb |
| 85 | 2-Methoxyethoxy-4,6-difluor-triazin | " | " |
| 86 | 2-Amino-4,6-dichlor-triazin | " | " |
| 87 | 2-Methylamino-4,6-dichlor-triazin | " | " |
| 88 | 2-Phenylamino-4,6-dichlor-triazin | " | " |
| 89 | 2-(3'-Sulfophenylamino)-4,6-dichlortriazin | " | " |
| 90 | 2-(4'-Sulfophenylamino)-4,6-dichlortriazin | " | " |
| 91 | 2-(2'-Methyl-5'-sulfophenyl-amino)-4,6-dichlor-triazin | " | " |
| 92 | 2-N-Methylphenylamino-4,6-dichlortriazin | " | " |
| 93 | 2,3-Dichlorchinoxalin-6-car=bonsäurechlorid | " | " |

| Beispiel | Reaktivkomponente | Kupplungskomponente | Farbton |
|---|---|---|---|
| 94 | 2,4,6-Trifluor-5-chlor-pyrimidin | 1-(3'-Sulfophenyl)-3-methyl-pyrazolon-5 | Gelb |
| 95 | 2,4,6-Trichlortriazin | " | " |
| 96 | 2,4,6-Trichlorpyrimidin | " | " |
| 97 | 2,4,6-Trichlor-5-methylsulfonyl-pyrimidin | " | " |
| 98 | 2,4,5,6-Tetrachlor-pyrimidin | " | " |
| 99 | 2-Methylsulfonyl-4,5-dichlor-6-methyl-pyrimidin | " | " |
| 100 | 2-Amino-4,6-difluor-triazin | " | " |
| 101 | 2-Methylamino-4,6-difluor-triazin | " | " |
| 102 | 2-Phenylamino-4,6-difluor-triazin | " | " |
| 103 | 2-(3'-Sulfophenylamino)-4,6-difluor-triazin | " | " |
| 104 | 2-(4'-Sulfophenylamino)-4,6-difluor-triazin | " | " |
| 105 | 2-(2'-Methyl-5'-sulfophenyl-amino)-4,6-difluortriazin | " | " |
| 106 | 2-(2'-chlor-4'-sulfophenyl-amino)-4,6-difluortriazin | " | " |

| Beispiel | Reaktivkomponente | Kupplungskomponente | Farbton |
|---|---|---|---|
| 107 | 2-(6'-Sulfonaphthyl-2'-amino)-4,6-difluortriazin | 1-(3'-Sulfophenyl)-3-methyl-pyrazolon-5 | Gelb |
| 108 | 2-Methoxyethoxy-4,6-difluortriazin | " | " |
| 109 | 2-Amino-4,6-dichlor-triazin | " | " |
| 110 | 2-Methylamino-4,6-dichlortriazin | " | " |
| 111 | 2-Phenylamino-4,6-dichlortriazin | " | " |
| 112 | 2-(3'-Sulfophenylamino)-4,6-dichlortriazin | " | " |
| 113 | 2-(4'-Sulfophenylamino)-4,6-dichlortriazin | " | " |
| 114 | 2-(2'-Methyl-5'-sulfophenylamino)-4,6-dichlor-triazin | " | " |
| 115 | 2-N-Methylphenylamino-4,6-dichlortriazin | " | " |
| 116 | 2,3-Dichlorchinoxalin-6-carbonsäurechlorid | " | " |

| Beispiel | Reaktivkomponente | Kupplungskomponente | Farbton |
|---|---|---|---|
| 117 | 2,4,6-Trifluor-5-chlor-pyrimidin | 1-(4'-Sulfophenyl)-3-carboxy-pyrazolon-5 | Gelb |
| 118 | 2,4,6-Trichlortriazin | " | " |
| 119 | 2,4,6-Trichlorpyrimidin | " | " |
| 120 | 2,4,6-Trichlor-5-methylsulfonyl-pyrimidin | " | " |
| 121 | 2,4,5,6-Tetrachlor-pyrimidin | " | " |
| 122 | 2-Methylsulfonyl-4,5-dichlor-6-methyl-pyrimidin | " | " |
| 123 | 2-Amino-4,6-difluor-triazin | " | " |
| 124 | 2-Methylamino-4,6-difluor-triazin | " | " |
| 125 | 2-Phenylamino-4,6-difluor-triazin | " | " |
| 126 | 2-(3'-Sulfophenylamino)-4,6-difluor-triazin | " | " |
| 127 | 2-(4'-Sulfophenylamino)-4,6-difluor-triazin | " | " |
| 128 | 2-(2'-Methyl-5'-sulfophenylamino)-4,6-difluortriazin | " | " |
| 129 | 2-(2'-chlor-4'-sulfophenylamino)-4,6-difluortriazin | " | " |

| Beispiel | Reaktivkomponente | Kupplungskomponente | Farbton |
|---|---|---|---|
| 130 | 2-(6'-Sulfonaphthyl-2'-amino)-4,6-difluortriazin | 1-(4'-Sulfophenyl)-3-carboxy-pyrazolon-5 | Gelb |
| 131 | 2-Methoxyethoxy-4,6-difluor-triazin | " | " |
| 132 | 2-Amino-4,6-dichlor-triazin | " | " |
| 133 | 2-Methylamino-4,6-dichlor-triazin | " | " |
| 134 | 2-Phenylamino-4,6-dichlor-triazin | " | " |
| 135 | 2-(3'-Sulfophenylamino)-4,6-dichlortriazin | " | " |
| 136 | 2-(4'-Sulfophenylamino)-4,6-dichlortriazin | " | " |
| 137 | 2-(2'-Methyl-5'-sulfophenyl-amino)-4,6-dichlor-triazin | " | " |
| 138 | 2-N-Methylphenylamino-4,6-dichlortriazin | " | " |
| 139 | 2,3-Dichlorchinoxalin-6-carbonsäurechlorid | " | " |

| Beispiel | Reaktivkomponente | Kupplungskomponente | Farbton |
|---|---|---|---|
| 140 | 2,4,6-Trifluor-5-chlor-pyrimidin | 1-(2'-Chlor-5'-sulfophenyl)-3-methyl-pyrazolon-5 | Gelb |
| 141 | 2,4,6-Trichlortriazin | " | " |
| 142 | 2,4,6-Trichlorpyrimidin | " | " |
| 143 | 2,4,6-Trichlor-5-methylsulfonyl-pyrimidin | " | " |
| 144 | 2,4,5,6-Tetrachlor-pyrimidin | " | " |
| 145 | 2-Methylsulfonyl-4,5-dichlor-6-methyl-pyrimidin | " | " |
| 146 | 2-Amino-4,6-difluor-triazin | " | " |
| 147 | 2-Methylamino-4,6-difluor-triazin | " | " |
| 148 | 2-Phenylamino-4,6-difluor-triazin | " | " |
| 149 | 2-(3'-Sulfophenylamino)-4,6-difluor-triazin | " | " |
| 150 | 2-(4'-Sulfophenylamino)-4,6-difluor-triazin | " | " |
| 151 | 2-(2'-Methyl-5'-sulfophenyl-amino)-4,6-difluortriazin | " | " |
| 152 | 2-(2'-chlor-4'-sulfophenyl-amino)-4,6-difluortriazin | " | " |

| Beispiel | Reaktivkomponente | Kupplungskomponente | Farbton |
|---|---|---|---|
| 153 | 2-(6'-Sulfonaphthyl-2'-amino)-4,6-difluortriazin | 1-(2'-Chlor-5'-sulfophenyl)-3-methyl-pyrazolon-5 | Gelb |
| 154 | 2-Methoxyethoxy-4,6-difluor-triazin | " | " |
| 155 | 2-Amino-4,6-dichlor-triazin | " | " |
| 156 | 2-Methylamino-4,6-dichlor-triazin | " | " |
| 157 | 2-Phenylamino-4,6-dichlor-triazin | " | " |
| 158 | 2-(3'-Sulfophenylamino)-4,6-dichlortriazin | " | " |
| 159 | 2-(4'-Sulfophenylamino)-4,6-dichlortriazin | " | " |
| 160 | 2-(2'-Methyl-5'-sulfophenyl-amino)-4,6-dichlor-triazin | " | " |
| 161 | 2-N-Methylphenylamino-4,6-dichlortriazin | " | " |
| 162 | 2,3-Dichlorchinoxalin-6-carbonsäurechlorid | " | " |

| Beispiel | Reaktivkomponente | Kupplungskomponente | Farbton |
| --- | --- | --- | --- |
| 163 | 2,4,6-Trifluor-5-chlor-pyrimidin | 1-Hydroxy-4-sulfo-naphthalin | Scharlach |
| 164 | 2,4,6-Trichlortriazin | " | " |
| 165 | 2,4,6-Trichlorpyrimidin | " | " |
| 166 | 2,4,6-Trichlor-5-methylsulfonyl-pyrimidin | " | " |
| 167 | 2,4,5,6-Tetrachlor-pyrimidin | " | " |
| 168 | 2-Methylsulfonyl-4,5-dichlor-6-methyl-pyrimidin | " | " |
| 169 | 2-Amino-4,6-difluor-triazin | " | " |
| 170 | 2-Methylamino-4,6-difluor-triazin | " | " |
| 171 | 2-Phenylamino-4,6-difluor-triazin | " | " |
| 172 | 2-(3'-Sulfophenylamino)-4,6-difluor-triazin | " | " |
| 173 | 2-(4'-Sulfophenylamino)-4,6-difluor-triazin | " | " |
| 174 | 2-(2'-Methyl-5'-sulfophenyl-amino)-4,6-difluortriazin | " | " |
| 175 | 2-(2'-chlor-4'-sulfophenyl-amino)-4,6-difluortriazin | " | " |

| Beispiel | Reaktivkomponente | Kupplungskomponente | Farbton |
|---|---|---|---|
| 176 | 2-(6'-Sulfonaphthyl-2'-amino)-4,6-difluortriazin | 1-Hydroxy-4-sulfo-naphthalin | Scharlach |
| 177 | 2-Methoxyethoxy-4,6-difluor-triazin | " | " |
| 178 | 2-Amino-4,6-dichlor-triazin | " | " |
| 179 | 2-Methylamino-4,6-dichlor-triazin | " | " |
| 180 | 2-Phenylamino-4,6-dichlor-triazin | " | " |
| 181 | 2-(3'-Sulfophenylamino)-4,6-dichlortriazin | " | " |
| 182 | 2-(4'-Sulfophenylamino)-4,6-dichlortriazin | " | " |
| 183 | 2-(2'-Methyl-5'-sulfophenyl-amino)-4,6-dichlor-triazin | " | " |
| 184 | 2-N-Methylphenylamino-4,6-dichlortriazin | " | " |
| 185 | 2,3-Dichlorchinoxalin-6-carbonsäurechlorid | " | " |

| Beispiel | Reaktivkomponente | Kupplungskomponente | Farbton |
|---|---|---|---|
| 186 | 2,4,6-Trifluor-5-chlor-pyrimidin | 1-Hydroxy-4,6-disulfo-naphthalin | Scharlach |
| 187 | 2,4,6-Trichlortriazin | " | " |
| 188 | 2,4,6-Trichlorpyrimidin | " | " |
| 189 | 2,4,6-Trichlor-5-methylsulfonyl-pyrimidin | " | " |
| 190 | 2,4,5,6-Tetrachlor-pyrimidin | " | " |
| 191 | 2-Methylsulfonyl-4,5-dichlor-6-methyl-pyrimidin | " | " |
| 192 | 2-Amino-4,6-difluor-triazin | " | " |
| 193 | 2-Methylamino-4,6-difluor-triazin | " | " |
| 194 | 2-Phenylamino-4,6-difluor-triazin | " | " |
| 195 | 2-(3'-Sulfophenylamino)-4,6-difluor-triazin | " | " |
| 196 | 2-(4'-Sulfophenylamino)-4,6-difluor-triazin | " | " |
| 197 | 2-(2'-Methyl-5'-sulfophenyl-amino)-4,6-difluortriazin | " | " |
| 198 | 2-(2'-chlor-4'-sulfophenyl-amino)-4,6-difluortriazin | " | " |

| Beispiel | Reaktivkomponente | Kupplungskomponente | Farbton |
|---|---|---|---|
| 199 | 2-(6'-Sulfonaphthyl-2'-amino)-4,6-difluortriazin | 1-Hydroxy-4,6-disulfo-naphthalin | Scharlach |
| 200 | 2-Methoxyethoxy-4,6-difluor-triazin | " | " |
| 201 | 2-Amino-4,6-dichlor-triazin | " | " |
| 202 | 2-Methylamino-4,6-dichlor-triazin | " | " |
| 203 | 2-Phenylamino-4,6-dichlor-triazin | " | " |
| 204 | 2-(3'-Sulfophenylamino)-4,6-dichlortriazin | " | " |
| 205 | 2-(4'-Sulfophenylamino)-4,6-dichlortriazin | " | " |
| 206 | 2-(2'-Methyl-5'-sulfophenyl-amino)-4,6-dichlor-triazin | " | " |
| 207 | 2-N-Methylphenylamino-4,6-dichlortriazin | " | " |
| 208 | 2,3-Dichlorchinoxalin-6-carbonsäurechlorid | " | " |

| Beispiel | Reaktivkomponente | Kupplungskomponente | Farbton |
|---|---|---|---|
| 209 | 2,4,6-Trifluor-5-chlor-pyrimidin | 1-Hydroxy-3,6-disulfo-naphthalin | Scharlach |
| 210 | 2,4,6-Trichlortriazin | " | " |
| 211 | 2,4,6-Trichlorpyrimidin | " | " |
| 212 | 2,4,6-Trichlor-5-methylsulfonyl-pyrimidin | " | " |
| 213 | 2,4,5,6-Tetrachlor-pyrimidin | " | " |
| 214 | 2-Methylsulfonyl-4,5-dichlor-6-methyl-pyrimidin | " | " |
| 215 | 2-Amino-4,6-difluor-triazin | " | " |
| 216 | 2-Methylamino-4,6-difluor-triazin | " | " |
| 217 | 2-Phenylamino-4,6-difluor-triazin | " | " |
| 218 | 2-(3'-Sulfophenylamino)-4,6-difluor-triazin | " | " |
| 219 | 2-(4'-Sulfophenylamino)-4,6-difluor-triazin | " | " |
| 220 | 2-(2'-Methyl-5'-sulfophenyl-amino)-4,6-difluortriazin | " | " |
| 221 | 2-(2'-chlor-4'-sulfophenyl-amino)-4,6-difluortriazin | " | " |

| Beispiel | Reaktivkomponente | Kupplungskomponente | Farbton |
|---|---|---|---|
| 222 | 2-(6'-Sulfonaphthyl-2'-amino)-4,6-difluortriazin | 1-Hydroxy-3,6-disulfo-naphthalin | Scharlach |
| 223 | 2-Methoxyethoxy-4,6-difluor-triazin | " | " |
| 224 | 2-Amino-4,6-dichlor-triazin | " | " |
| 225 | 2-Methylamino-4,6-dichlor-triazin | " | " |
| 226 | 2-Phenylamino-4,6-dichlor-triazin | " | " |
| 227 | 2-(3'-Sulfophenylamino)-4,6-dichlortriazin | " | " |
| 228 | 2-(4'-Sulfophenylamino)-4,6-dichlortriazin | " | " |
| 229 | 2-(2'-Methyl-5'-sulfophenyl-amino)-4,6-dichlor-triazin | " | " |
| 230 | 2-N-Methylphenylamino-4,6-dichlortriazin | " | " |
| 231 | 2,3-Dichlorchinoxalin-6-carbonsäurechlorid | " | " |

| Beispiel | Reaktivkomponente | Kupplungskomponente | Farbton |
|---|---|---|---|
| 232 | 2,4,6-Trifluor-5-chlor-pyrimidin | 1-Hydroxy-8-benzoylamino-3,6-disulfo-naphthalin | blaustichig Rot |
| 233 | 2,4,6-Trichlortriazin | " | " |
| 234 | 2,4,6-Trichlorpyrimidin | " | " |
| 235 | 2,4,6-Trichlor-5-methylsulfonyl-pyrimidin | " | " |
| 236 | 2,4,5,6-Tetrachlor-pyrimidin | " | " |
| 237 | 2-Methylsulfonyl-4,5-dichlor-6-methyl-pyrimidin | " | " |
| 238 | 2-Amino-4,6-difluor-triazin | " | " |
| 239 | 2-Methylamino-4,6-difluor-triazin | " | " |
| 240 | 2-Phenylamino-4,6-difluor-triazin | " | " |
| 241 | 2-(3'-Sulfophenylamino)-4,6-difluor-triazin | " | " |
| 242 | 2-(4'-Sulfophenylamino)-4,6-difluor-triazin | " | " |
| 243 | 2-(2'-Methyl-5'-sulfophenyl-amino)-4,6-difluortriazin | " | " |
| 244 | 2-(2'-chlor-4'-sulfophenyl-amino)-4,6-difluortriazin | " | " |

| Beispiel | Reaktivkomponente | Kupplungskomponente | Farbton |
|---|---|---|---|
| 245 | 2-(6'-Sulfonaphthyl-2'-amino)-4,6-difluortriazin | 1-Hydroxy-8-benzoylamino-3,6-disulfonaphthalin | blaustichig Rot |
| 246 | 2-Methoxyethoxy-4,6-difluortriazin | " | " |
| 247 | 2-Amino-4,6-dichlor-triazin | " | " |
| 248 | 2-Methylamino-4,6-dichlortriazin | " | " |
| 249 | 2-Phenylamino-4,6-dichlortriazin | " | " |
| 250 | 2-(3'-Sulfophenylamino)-4,6-dichlortriazin | " | " |
| 251 | 2-(4'-Sulfophenylamino)-4,6-dichlortriazin | " | " |
| 252 | 2-(2'-Methyl-5'-sulfophenylamino)-4,6-dichlor-triazin | " | " |
| 253 | 2-N-Methylphenylamino-4,6-dichlortriazin | " | " |
| 254 | 2,3-Dichlorchinoxalin-6-carbonsäurechlorid | " | " |

| Beispiel | Reaktivkomponente | Kupplungskomponente | Farbton |
|---|---|---|---|
| 255 | 2,4,6-Trifluor-5-chlor-pyrimidin | **1-Hydroxy-8-benzoylamino-3,5-disulfo-naphthalin** | **blaustichig Rot** |
| 256 | 2,4,6-Trichlortriazin | " | " |
| 257 | 2,4,6-Trichlorpyrimidin | " | " |
| 258 | 2,4,6-Trichlor-5-methylsulfonyl-pyrimidin | " | " |
| 259 | 2,4,5,6-Tetrachlor-pyrimidin | " | " |
| 260 | 2-Methylsulfonyl-4,5-dichlor-6-methyl-pyrimidin | " | " |
| 261 | 2-Amino-4,6-difluor-triazin | " | " |
| 262 | 2-Methylamino-4,6-difluor-triazin | " | " |
| 263 | 2-Phenylamino-4,6-difluor-triazin | " | " |
| 264 | 2-(3'-Sulfophenylamino)-4,6-difluor-triazin | " | " |
| 265 | 2-(4'-Sulfophenylamino)-4,6-difluor-triazin | " | " |
| 266 | 2-(2'-Methyl-5'-sulfophenyl-amino)-4,6-difluortriazin | " | " |
| 267 | 2-(2'-chlor-4'-sulfophenyl-amino)-4,6-difluortriazin | " | " |

| Beispiel | Reaktivkomponente | Kupplungskomponente | Farbton |
|---|---|---|---|
| 268 | 2-(6'-Sulfonaphthyl-2'-amino)-4,6-difluortriazin | 1-Hydroxy-8-benzoylamino-3,5-disulfo-naphthalin | blaustichig Rot |
| 269 | 2-Methoxyethoxy-4,6-difluor-triazin | " | " |
| 270 | 2-Amino-4,6-dichlor-triazin | " | " |
| 271 | 2-Methylamino-4,6-dichlor-triazin | " | " |
| 272 | 2-Phenylamino-4,6-dichlor-triazin | " | " |
| 273 | 2-(3'-Sulfophenylamino)-4,6-dichlortriazin | " | " |
| 274 | 2-(4'-Sulfophenylamino)-4,6-dichlortriazin | " | " |
| 275 | 2-(2'-Methyl-5'-sulfophenyl-amino)-4,6-dichlor-triazin | " | " |
| 276 | 2-N-Methylphenylamino-4,6-dichlortriazin | " | " |
| 277 | 2,3-Dichlorchinoxalin-6-carbonsäurechlorid | " | " |

| Beispiel | Reaktivkomponente | Kupplungskomponente | Farbton |
|---|---|---|---|
| 278 | 2,4,6-Trifluor-5-chlor-pyrimidin | 1-Hydroxy-6-ureido-3-sulfo-naphthalin | Orange |
| 279 | 2,4,6-Trichlortriazin | " | " |
| 280 | 2,4,6-Trichlorpyrimidin | " | " |
| 281 | 2,4,6-Trichlor-5-methylsulfonyl-pyrimidin | " | " |
| 282 | 2,4,5,6-Tetrachlor-pyrimidin | " | " |
| 283 | 2-Methylsulfonyl-4,5-dichlor-6-methyl-pyrimidin | " | " |
| 284 | 2-Amino-4,6-difluor-triazin | " | " |
| 285 | 2-Methylamino-4,6-difluor-triazin | " | " |
| 286 | 2-Phenylamino-4,6-difluor-triazin | " | " |
| 287 | 2-(3'-Sulfophenylamino)-4,6-difluor-triazin | " | " |
| 288 | 2-(4'-Sulfophenylamino)-4,6-difluor-triazin | " | " |
| 289 | 2-(2'-Methyl-5'-sulfophenyl-amino)-4,6-difluortriazin | " | " |
| 290 | 2-(2'-chlor-4'-sulfophenyl-amino)-4,6-difluortriazin | " | " |

| Beispiel | Reaktivkomponente | Kupplungskomponente | Farbton |
|---|---|---|---|
| 291 | 2-(6'-Sulfonaphthyl-2'-amino)-4,6-difluortriazin | 1-Hydroxy-6-ureido-3-sulfo-naphthalin | Orange |
| 292 | 2-Methoxyethoxy-4,6-difluortriazin | " | " |
| 293 | 2-Amino-4,6-dichlor-triazin | " | " |
| 294 | 2-Methylamino-4,6-dichlortriazin | " | " |
| 295 | 2-Phenylamino-4,6-dichlortriazin | " | " |
| 296 | 2-(3'-Sulfophenylamino)-4,6-dichlortriazin | " | " |
| 297 | 2-(4'-Sulfophenylamino)-4,6-dichlortriazin | " | " |
| 298 | 2-(2'-Methyl-5'-sulfophenylamino)-4,6-dichlor-triazin | " | " |
| 299 | 2-N-Methylphenylamino-4,6-dichlortriazin | " | " |
| 300 | 2,3-Dichlorchinoxalin-6-carbonsäurechlorid | " | " |

| Beispiel | Reaktivkomponente | Kupplungskomponente | Farbton |
|---|---|---|---|
| 301 | 2,4,6-Trifluor-5-chlor-pyrimidin | 1-Hydroxy-6-acetylamino-3-sulfo-naphthalin | Orange |
| 302 | 2,4,6-Trichlortriazin | " | " |
| 303 | 2,4,6-Trichlorpyrimidin | " | " |
| 304 | 2,4,6-Trichlor-5-methylsulfonyl-pyrimidin | " | " |
| 305 | 2,4,5,6-Tetrachlor-pyrimidin | " | " |
| 306 | 2-Methylsulfonyl-4,5-dichlor-6-methyl-pyrimidin | " | " |
| 307 | 2-Amino-4,6-difluor-triazin | " | " |
| 308 | 2-Methylamino-4,6-difluor-triazin | " | " |
| 309 | 2-Phenylamino-4,6-difluor-triazin | " | " |
| 310 | 2-(3'-Sulfophenylamino)-4,6-difluor-triazin | " | " |
| 311 | 2-(4'-Sulfophenylamino)-4,6-difluor-triazin | " | " |
| 312 | 2-(2'-Methyl-5'-sulfophenyl-amino)-4,6-difluortriazin | " | " |
| 313 | 2-(2'-chlor-4'-sulfophenyl-amino)-4,6-difluortriazin | " | " |

| Beispiel | Reaktivkomponente | Kupplungskomponente | Farbton |
|---|---|---|---|
| 314 | 2-(6'-Sulfonaphthyl-2'-amino)-4,6-difluortriazin | 1-Hydroxy-6-acetylamino-3-sulfonaphthalin | Orange |
| 315 | 2-Methoxyethoxy-4,6-difluortriazin | " | " |
| 316 | 2-Amino-4,6-dichlor-triazin | " | " |
| 317 | 2-Methylamino-4,6-dichlortriazin | " | " |
| 318 | 2-Phenylamino-4,6-dichlortriazin | " | " |
| 319 | 2-(3'-Sulfophenylamino)-4,6-dichlortriazin | " | " |
| 320 | 2-(4'-Sulfophenylamino)-4,6-dichlortriazin | " | " |
| 321 | 2-(2'-Methyl-5'-sulfophenylamino)-4,6-dichlor-triazin | " | " |
| 322 | 2-N-Methylphenylamino-4,6-dichlortriazin | " | " |
| 323 | 2,3-Dichlorchinoxalin-6-car=bonsäurechlorid | " | " |

Beispiel 324

33,2 g 2-Amino-5-aminomethyl-1,7-disulfo-naphthalin werden in 400 ml Wasser von 15° verrührt und die Suspension auf pH 8,5 gestellt. Man tropft dann 16,9 g Trifluor-5-chlorpyrimidin ein, wobei durch gleichzeitige Zugabe von verdünnter Natronlauge ein pH von 8,5-9 eingehalten wird. Nach beendigter Acylierung setzt man 7 g Natriumnitrit zu und gibt die schwach alkalische Lösung in eine Vorlauge aus 28 ml konz. Salzsäure und 400 ml Eiswasser. Die Diazotierung wird dann zu einer Mischung aus 19,6 g l-Ethyl-3-carbamoyl-4-methyl-6-hydroxy-pyridon-(2) und 28 g Natriumhydrogencarbonat in 200 ml Wasser gegeben. Die weitere Aufarbeitung erfolgt wie in Beispiel 2 angegeben, und der resultierende Farbstoff ist identisch mit dem nach Beispiel 2 angegebenen Farbstoff.

Beispiel 325

Eine Lösung von 47,3 g des sekundären Kondensationsproduktes aus 1 Mol Cyanurchlorid, 1 Mol 1,3-Diamino-benzol-4-sulfonsäure und 1 Mol 1-Amino-benzol-3-sulfonsäure in 500 g Eiswasser wird mit einer Lösung von 18,5 g Cyanurchlorid in 50 ml Aceton versetzt. Während der Kondensation hält man durch Zugabe von 2n-NaOH einen pH von 6-7 ein. Wenn keine Aminogruppe mehr nachweisbar ist, setzt man 53,4 g des Azofarbstoffs 1,7-Disulfo-5-aminomethyl-naphthalin-< 2 azo 5 >-1-äthyl-3-carbamoyl-4-methyl-6-hydroxy pyridon-(2) zu und erwärmt auf 30-35 °C, wobei man den pH mit 2n NaOH bei 8,5 hält. Nach beendigter Kondensation wird der Farbstoff ausgesalzen, abgesaugt, getrocknet und gemahlen. Er stellt ein gelbes, in Wasser leicht lösliches Pulver dar und entspricht der Formel

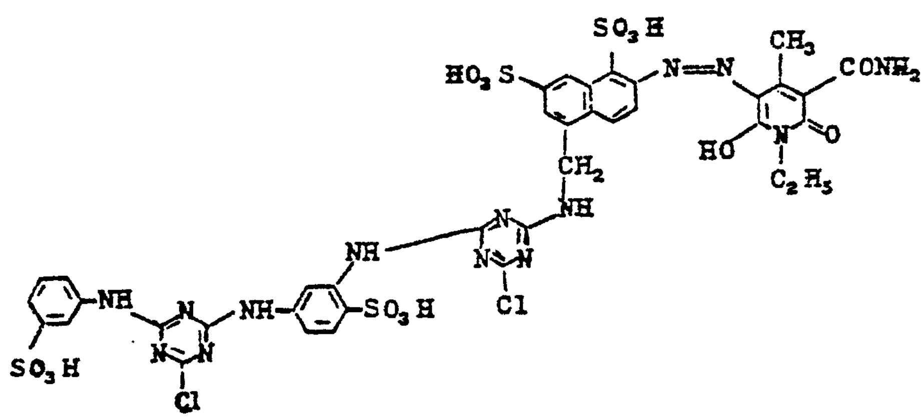

Wenn man nach den Angaben dieses Beispiels verfährt, jedoch anstelle des sekundären Kondensationsproduktes aus 1 Mol Cyanurchlorid, 1 Mol 1,3-Diamino-benzol-4-sulfonsäure und 1 Mol 1-Amino-benzol-3-sulfonsäure die nachfolgend aufgeführten einsetzt, so erhält man gleichfalls wertvolle Farbstoffe, die bei der Applikation im Textildruck sich durch eine besonders hohe Fixierausbeute auszeichnen.

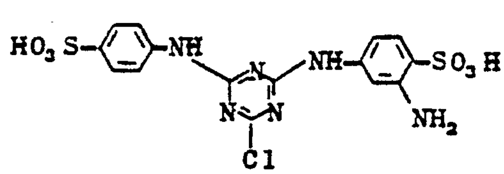

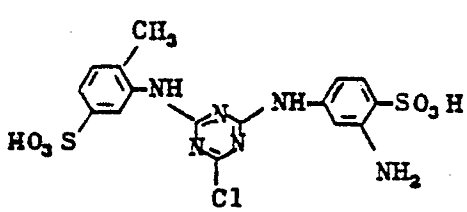

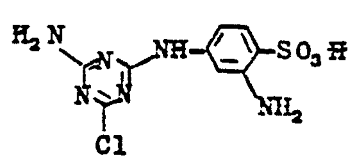

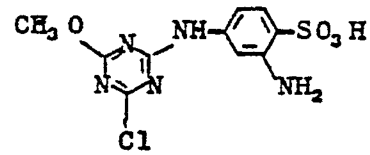

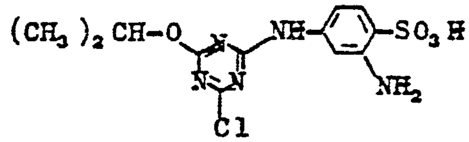

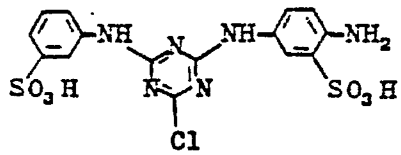

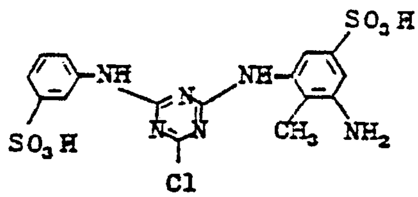

Beispiel 326

53,4 g des Azofarbstoffs 1,7-Disulfo-5-amino-methyl-naphthalin- <2 azo 5> 1-ethyl-3-carbamoyl-4-methyl-6-hydroxypyridon-(2) werden in 500 ml Wasser von 5-10° verrührt und mit 18,5 g Cyanurchlorid versetzt. Der pH-Wert wird durch Zutropfen von verdünnter Matronlauge zwischen 8,5 und 9 gehalten. Nach beendigter Kondensation setzt man der Lösung 5,4 g p-Phenylendiamin zu, erwärmt auf 40° und hält den pH-Wert zwischen 5 und 6 mit verdünnter Natronlauge. Der Farbstoff wird durch Aussalzen abgeschieden, isoliert, getrocknet und gemahlen. Es resultiert ein gelbes in Wasser leicht lösliches Farbstoffpulver. Der Farbstoff entspricht der Formel

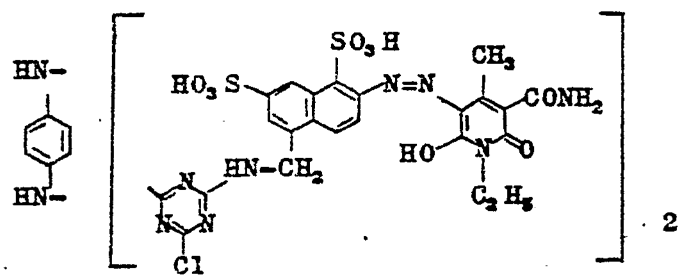

Wenn man nach den Angaben dieses Beispiels verfährt, jedoch anstelle von p-Phenylendiamin eine äquivalente Menge der nachfolgend aufgeführten Diamine verwendet, so erhält man gleichfalls wertvolle Reaktivfarbstoffe des gleichen Farbtons :

Ethylendiamin, 1,3-Diaminopropan, 1,6-Diaminohexan, 1,3-Phenylendiamin, 1,3-Phenylendiamin-4-sulfonsäure, 1,4-Phenylendiamin-2-sulfonsäure, 2,4-Diamino-toluol, 4,4'-Diaminodiphenyl-2,2'-disulfonsäure, 4,4'-Diaminodiphenylharnstoff-2,2'-disulfonsäure, 2,6-Diaminonaphthalin-4,8-disulfonsäure, 4,4'-Diaminodiphenylether, 2,5-Diamino-benzoesäure und 1,4-Phenylendiamin-2',5'-disulfonsäure.

Nach der Arbeitsweise dieses Beispiels erhält man weitere wertvolle Reaktivfarbstoffe, wenn man äquivalente Mengen der in nachfolgender Tabelle aufgeführten Azofarbstoffe einsetzt :

| Beispiel | Azofarbstoff | Farbton |
|---|---|---|
| 327 | 1,7-Disulfo-5-aminomethyl-naphtha=lin <2 azo 2> -1-hydroxy-8-benzoyl-amino-3,5-disulfo-naphthalin | blaust.Rot |

(Fortsetzung)

| Beispiel | Azofarbstoff | Farbton |
|---|---|---|
| 328 | 1,7-Disulfo-5-aminomethyl-naphthalin<2 azo 2>-1-hydroxy-3,6-disulfo-naphthalin | Scharlach |
| 329 | 1,7-Disulfo-5-aminomethyl-naphthalin <2 azo 4>-1-(4'-sulfophenyl)-3-methyl-pyrazolon-5 | Gelb |

**Ansprüche** (für die Vertragsstaaten : DE, GB, CH und FR)

1. Farbstoffe der Formel

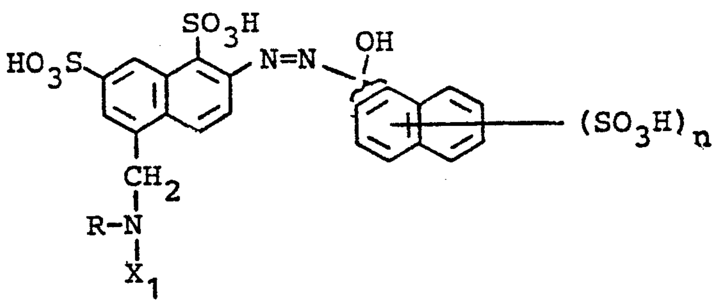

worin
R = Wasserstoff, $C_1$-$C_4$-Alkyl,
$X_1$ = Rest einer Reaktivkomponente,
n = 2 oder 3.

2. Farbstoffe der Formel

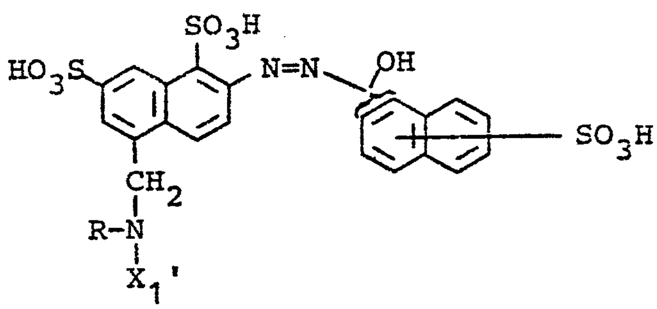

worin
R = Wasserstoff, $C_1$-$C_4$-Alkyl,
$X_1'$ = Halogentriazinyl, Trichlorpyrimidinyl, Dichlorpyrimidinyl, Monofluormonochlorpyrimidinyl, Monofluorpyrimidinyl.

3. Farbstoffe der Formel

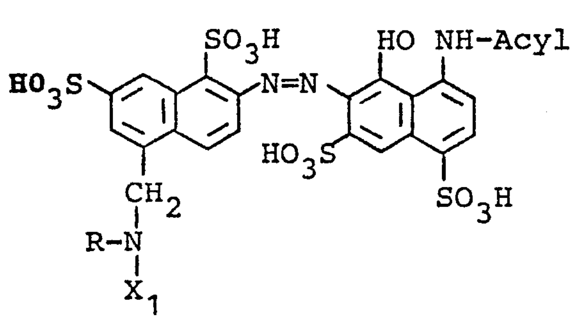

worin

R und $X_1$ die in Anspruch 1 angegebene Bedeutung besitzen und

Acyl für den Rest einer Acylkomponente steht.

4. Farbstoffe der Formel

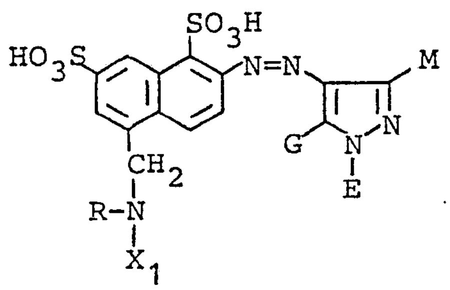

worin

R und $X_1$ die in Anspruch 1 angegebene Bedeutung haben,

E für einen durch mindestens eine wasserlöslich machende Gruppe, insbesondere eine Sulfonsäuregruppe, substituierten Alkyl-, Phenyl- oder Naphthylrest,

M für eine Methyl-, Carboxy- oder Carbonamidgruppe und

G für eine OH- oder $NH_2$-Gruppe steht.

5. Farbstoffe der Formel

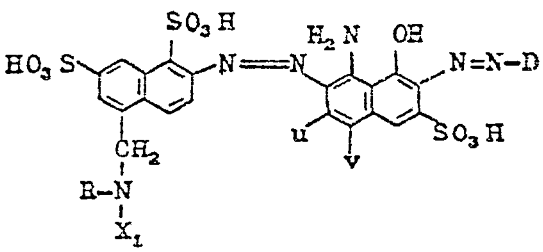

worin

R und $X_1$ die in Anspruch 1 angegebene Bedeutung haben,

u und v für Wasserstoff oder für eine Sulfonsäuregruppe stehen, wobei $u \neq v$ und

D für den Rest einer Diazokomponente der Benzol- oder Naphthalinreihe steht.

6. Farbstoffe der Formel

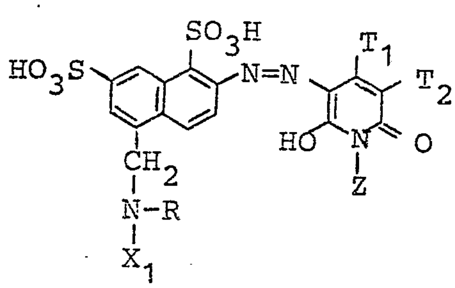

worin

R die in Anspruch 1 angegebene Bedeutung besitzt,

$T_1$ = Wasserstoff, ggf. subst. Alkyl, Aralkyl, Cycloalkyl, Aryl, Heteroaryl, eine Gruppe der Formel —CN, —$CONR_1R_2$, —$COR_1$ oder —OH, wobei

$R_1$ und $R_2$ jeweils unabhängig voneinander Wasserstoff, ggf. subst. Alkyl, Aralkyl, Cycloalkyl, Aryl oder Heteroaryl bedeutet oder wobei

die Gruppe —$NR_1R_2$ für den Rest einer fünf- oder sechsgliedrigen heterocyclischen Ringverbindung steht und

$T_2$ = Wasserstoff, ggf. subst. Alkyl, Aralkyl, Cycloalkyl, Aryl, Heteroaryl, eine Sulfo-, eine Nitro-, eine Nitroso-, eine Alkylsulfonyl-, eine Arylsulfonyl- oder eine Acylaminogruppe, ein Halogenatom wie Chlor, Brom oder Fluor, eine Gruppe der Formel —CN, —$CONR_1R_2$ oder —$COR_1$,

worin

$R_1$ und $R_2$ die oben angegebene Bedeutung besitzen,

Z = Wasserstoff, ggf. subst. Alkyl, Aralkyl, Cycloalkyl, Aryl oder Heteroaryl.
und worin

$X_1$ = ein Rest der Reihe Aminomonochlortriazinyl, Alkylaminomonochlortriazinyl, Arylaminomonochlortriazinyl, Alkoxymonochlortriazinyl, Aminomonofluortriazinyl, Alkylaminomonofluortriazinyl, Arylaminomonofluortriazinyl, Dichlortriazinyl, Monohalogenpyrimidinyl, Dihalogenpyrimidinyl, Trihalogenpyrimidinyl, 2,3-Dichlorchinoxalin-6-carbonyl.

7. Verwendung der Farbstoffe gemäß Ansprüchen 1 bis 6 zum Färben und Bedrucken von Hydroxyl- und amidgruppenhaltigen Materialien.

**Ansprüche** (für den Vertragsstaat IT)

1. Farbstoffe der Formel

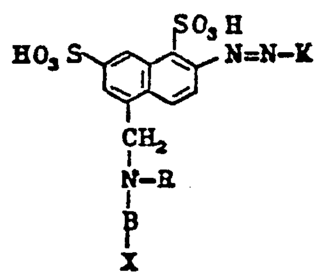

worin

R = Wasserstoff, $C_1$-$C_4$-Alkyl,
B = direkte Bindung oder Brückenglied,
X = Rest einer Reaktivkomponente,
K = Rest einer Kupplungskomponente.

2. Farbstoffe der Formel gemäß Anspruch 1, worin R, B und K die dort angegebene Bedeutung hat und X für den Rest einer Reaktivkomponente der Halogentriazinyl-, Tri- oder Dihalogenpyrimidinyl- oder der Monofluorpyrimidinylreihe steht.

3. Farbstoffe der Formel

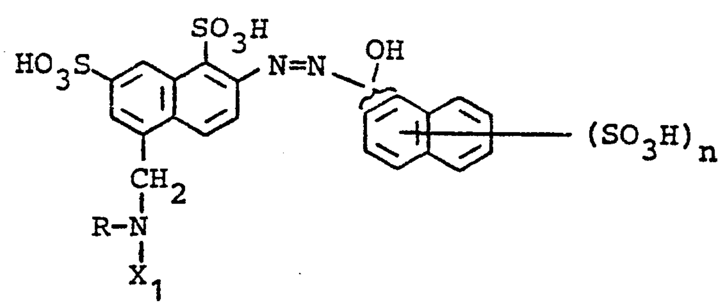

worin

R die in Anspruch 1 angegebene Bedeutung hat,
$X_1$ = Rest einer Reaktivkomponente und
n für 1, 2 oder 3 steht.

4. Farbstoffe der Formel

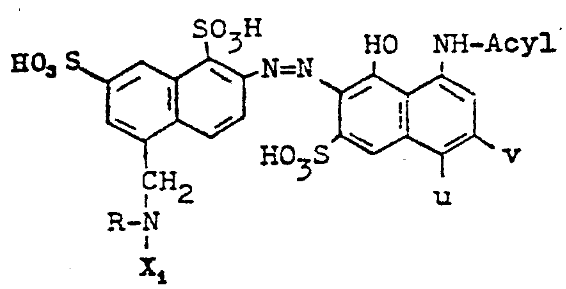

worin

B und $X_1$ die in Anspruch 1 bzw. 2 angegebene Bedeutung haben,

u und v für Wasserstoff oder für eine Sulfonsäuregruppe stehen, wobei u ≠ v und Acyl für den Rest einer Acylkomponente steht.

5. Farbstoffe der Formel

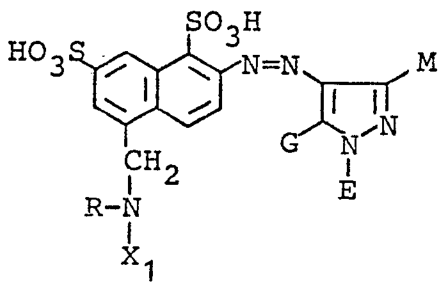

worin

R und $X_1$ die in Anspruch 1 bzw. 2 angegebene Bedeutung haben,

E für einen durch mindestens eine wasserlöslich machende Gruppe, insbesondere eine Sulfonsäuregruppe, substituierten Alkyl-, Phenyl- oder Naphthylrest,

M für eine Methyl-, Carboxy- oder Carbonamidgruppe und

G für eine OH-, oder $NH_2$-Gruppe steht.

6. Farbstoffe der Formel

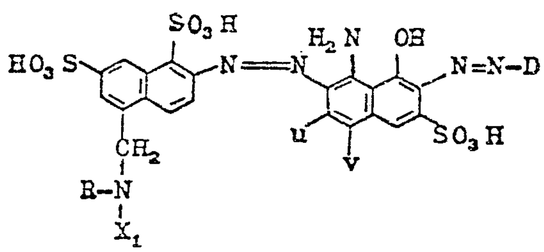

worin

R, $X_1$, u und v die in Anspruch 1, bzw. 2, bzw. 3 angegebene Bedeutung haben und

D für den Rest einer Diazokomponente der Benzol- oder Naphthalinreihe steht.

7. Farbstoffe der Formel

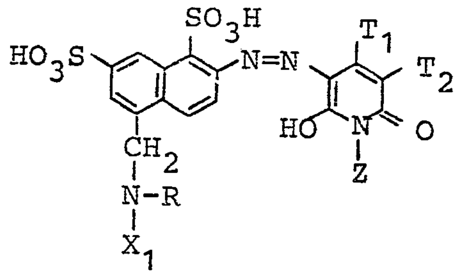

(VI)

worin

R und $X_1$ die angegebene Bedeutung haben,

$T_1$ = Wasserstoff, ggf. subst. Alkyl, Aralkyl, Cycloalkyl, Aryl, Heteroaryl, eine Gruppe der Formel —CN, —CCNR$_1$R$_2$, —COR$_1$ oder —OH, wobei

$R_1$ und $R_2$ jeweils unabhängig voneinander Wasserstoff, ggf. subst. Alkyl, Aralkyl, Cycloalkyl, Aryl oder Heteroaryl bedeutet oder wobei

die Gruppe —NR$_1$R$_2$ für den Rest einer fünf- oder sechsgliedrigen heterocyclischen Ringverbindung steht und

$T_2$ = Wasserstoff, ggf. subst. Alkyl, Aralkyl, Cycloalkyl, Aryl, Heteroaryl, eine Sulfo-, eine Nitro-, eine Nitroso-, eine Alkylsulfonyl-, eine Arylsulfonyl- oder eine Acylaminogruppe, ein Halogenatom wie Chlor, Brom oder Fluor, eine Gruppe der Formel —CN, —CONR$_1$R$_2$ oder —COR$_1$,

Z = Wasserstoff, ggf. subst. Alkyl, Aralkyl, Cycloalkyl, Aryl oder Heteroaryl.

8. Verfahren zur Herstellung der Farbstoffe des Anspruchs 1, dadurch gekennzeichnet, daß man Amine der Formel

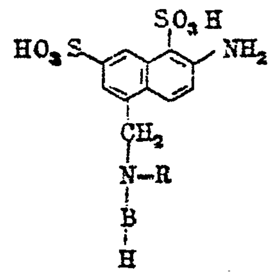

worin

B, R und X die in Anspruch 1 angegebene Bedeufung haben, diazotiert und mit Kupplungskomponenten der Formel H—K

worin

K die in Anspruch 1 angegebene Bedeutung hat, vereinigt.

9. Verwendung von Farbstoffen der Ansprüche 1 bis 6 zum Färben und Bedrucken von Hydroxyl- und amidgruppenhaltigen Materialien.

**Claims** (for the contracting States : DE, GB, CH and FR)

1. Dyestuffs of the formula

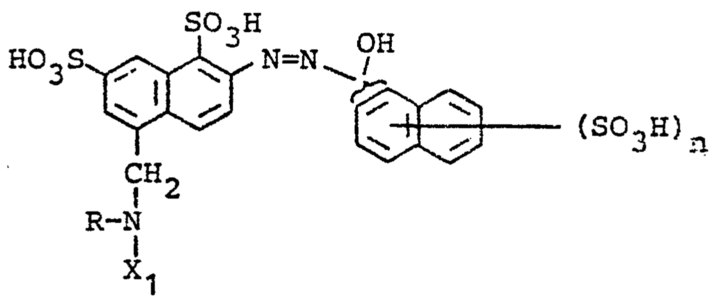

wherein

R = hydrogen or $C_1$-$C_4$-alkyl,

$X_1$ = the radical of a reactive component and

n = 2 or 3.

2. Dyestuffs of the formula

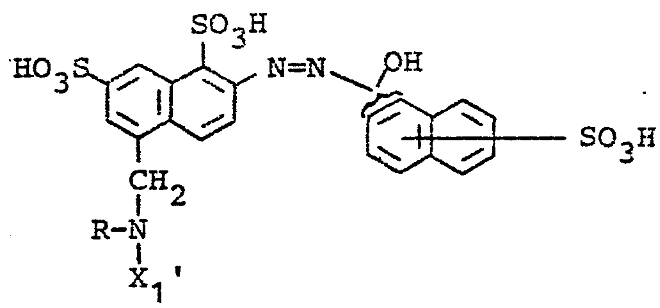

wherein

R = hydrogen or $C_1$-$C_4$-alkyl,

$X_1'$ = halogenotriazinyl, trichloropyrimidinyl, dichloropyrimidinyl, monofluoromonochloropyrimidinyl or monofluoropyrimidinyl.

3. Dyestuffs of the formula

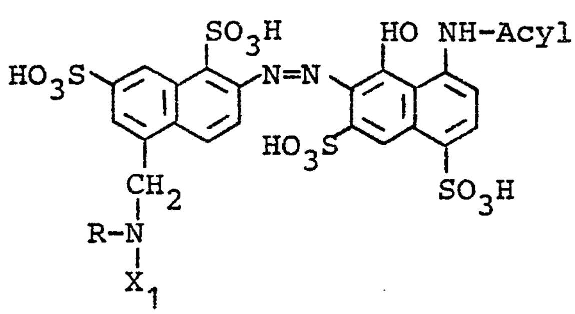

wherein

R and $X_1$ have the meaning indicated in Claim 1 and

Acyl represents the radical of an acyl component.

4. Dyestuffs of the formula

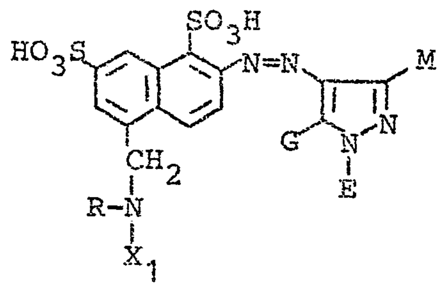

wherein

R and $X_1$ have the meaning indicated in Claim 1,

E represents an alkyl, phenyl or naphthyl radical which is substituted by at least one group conferring solubility in water, in particular a sulphonic acid group,

M represents a methyl, carboxyl or carboxamide group and

G represents an OH or $NH_2$ group.

5. Dyestuffs of the formula

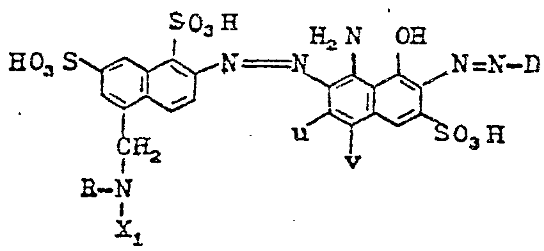

wherein

R and $X_1$ have the meaning indicated in Claim 1,

u and v represent hydrogen or a sulphonic acid group, and $u \neq v$ and

D represents the radical of a diazo component of the benzene or naphthalene series.

6. Dyestuffs of the formula

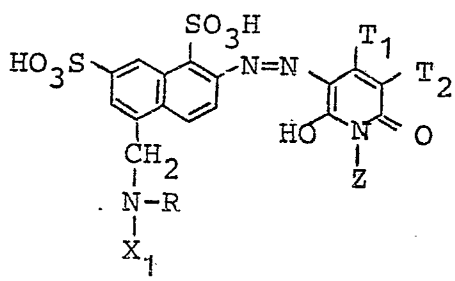

wherein

R has the meaning indicated in Claim 1,

$T_1$ = hydrogen, optionally substituted alkyl, aralkyl, cycloalkyl, aryl or hetero-aryl or a group of the formula —CN, —$CONR_1R_2$, —$COR_1$ or —OH,

wherein

$R_1$ and $R_2$ in each case independently of one another denotehydrogen or optionally substituted alkyl, aralkyl, cycloalkyl, aryl or heteroaryl

or wherein

The group —$NR_1R_2$ represents the radical of a five-membered or six-membered heterocyclic ring compound, and

$T_2$ = hydrogen, optionally substituted alkyl, aralkyl, cycloalkyl, aryl or herero-aryl, a sulpho, nitro, nitroso, alkylsulphonyl, arylsulphonyl or acylamino group, a halogen atom, such as chlorine, bromine or fluorine, or a group of the formula —CN, —$CONR_1R_2$ or —$COR_1$,

wherein

$R_1$ and $R_2$ have the meaning indicated above,

Z = hydrogen, or optionally substituted alkyl, aralkyl, cycloalkyl, aryl or heteroaryl,

and wherein

$X_1$ = a radical of the aminomonochlorotriazinyl, alkylaminomonochlorotriazinyl, arylaminomonochlorotriazinyl, alkoxymonochlorotriazinyl, aminomonofluorotriazinyl, alkylaminomonofluorotriazinyl, arylaminomonofluorotriazinyl, dichlorotriazinyl, monohalogenopyrimidinyl, dihalogenopyrimidinyl, trihalogenopyrimidinyl, 2,3-dichloroquinoxaline-6-carbonyl series.

7. Use of the dyestuffs according to Claims 1 to 6 for dyeing and printing materials containing hydroxyl groups and amide groups.

**Claims** (for the contracting State IT)

1. Dyestuffs of the formula

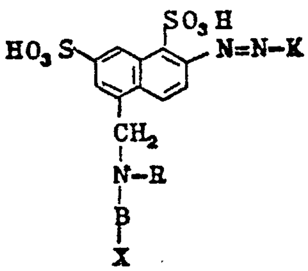

wherein

R = hydrogen or $C_1$-$C_4$-alkyl,

B = a direct bond or a bridge member,

X = the radical of a reactive component and

K = the radical of a coupling component.

2. Dyestuffs of the formula according to Claim 1, in which R, B and K have the meaning indicated therein and X represents the radical of a reactive component of the halogenotriazinyl, tri- or dihalogenopyrimidinyl or of the monofluoropyrimidinyl series.

3. Dyestuffs of the formula

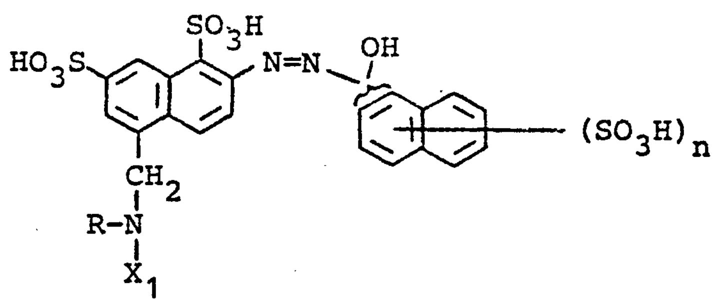

wherein

R has the meaning indicated in Claim 1,

$X_1$ = the radical of a reactive component and

n represents 1, 2 or 3.

4. Dyestuffs of the formula

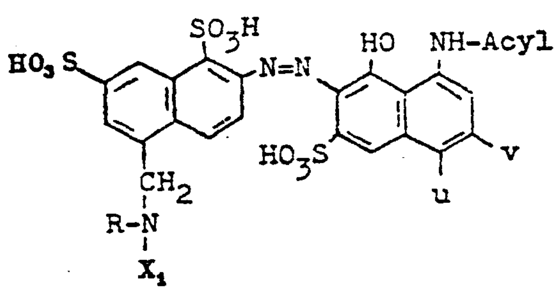

wherein

B and $X_1$ have the meaning indicated in Claim 1 or 2,

u and v represent hydrogen or a sulphonic acid group, and u ≠ v, and

Acyl represents the radical of an acyl component.

5. Dyestuffs of the formula

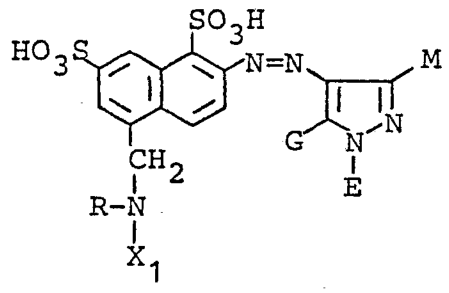

wherein

R and $X_1$ have the meaning indicated in Claim 1 or 2,

E represents an alkyl, phenyl or naphthyl radical which is substituted by at least one group conferring solubility in water, in particular a sulphonic acid group,

M represents a methyl, carboxyl or carboxamide group and

G represents an OH or $NH_2$ group.

6. Dyestuffs of the formula

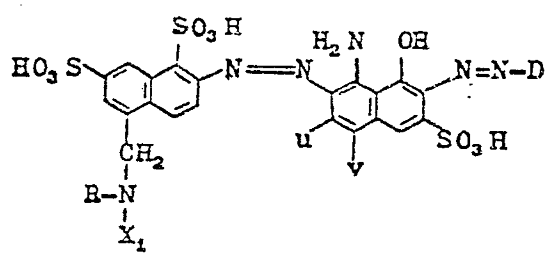

wherein

R, $X_1$, u and v have the meaning indicated in Claim 1, 2 or 3 and

D represents the radical of a diazo component of the benzene or naphthalene series.

7. Dyestuffs of the formula

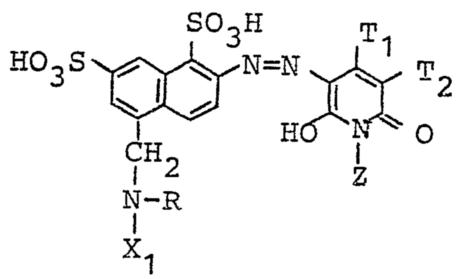

(VI)

wherein

R and $X_1$ have the meaning indicated,

$T_1$ = hydrogen, optionally substituted alkyl, aralkyl, cycloalkyl, aryl or hetero-aryl or a group of the formula —CN, —$CONR_1R_2$, —$COR_1$ or —OH,

wherein

$R_1$ and $R_2$ in each case independently of one another denote hydrogen or optionally substituted alkyl, aralkyl, cycloalkyl, aryl or heteroaryl, or

the group —$NR_1R_2$ represents the radical of a five-membered or six-membered heterocyclic ring compound and

$T_2$ = hydrogen, optionally substituted alkyl, aralkyl, cycloalkyl, aryl or herero-aryl, a sulpho, nitro, nitroso, alkylsulphonyl, arylsulphonyl or acylamino group, a halogen atom, such as chlorine, bromine or fluorine, or a group of the formula —CN, —$CONR_1R_2$ or —$COR_1$,

Z = hydrogen or optionally substituted alkyl, aralkyl, cycloakyl, aryl or hetero-aryl.

8. Process for the preparation of the dyestuffs of Claim 1, characterised in that amines of the formula

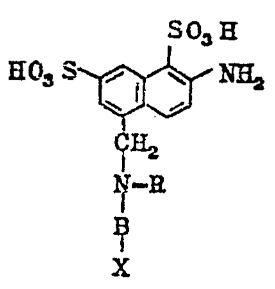

wherein

B, R and X have the meaning indicated in Claim 1, are diazotised and the diazotisation products are combined with coupling components of the formula H—K

wherein

K has the meaning indicated in Claim 1.

9. Use of the dyestuffs according to Claims 1 to 6 for dyeing and printing materials containing hydroxyl groups and amide groups.

**Revendications** (pour les Etats contractants : CH, DE, FR et GB)

1. Colorants de formule

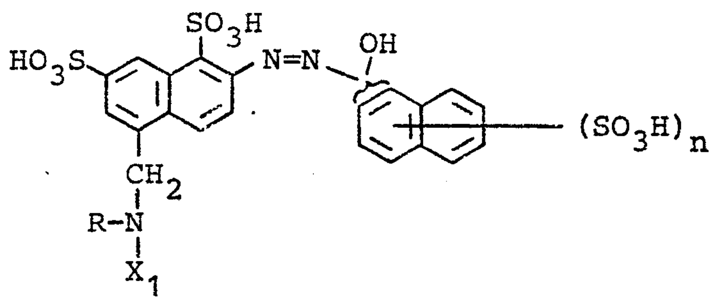

dans laquelle

R = hydrogène, reste alkyle en $C_1$ à $C_4$,

$X_1$ = reste d'un composant réactif,

n = 2 ou 3.

2. Colorants de formule

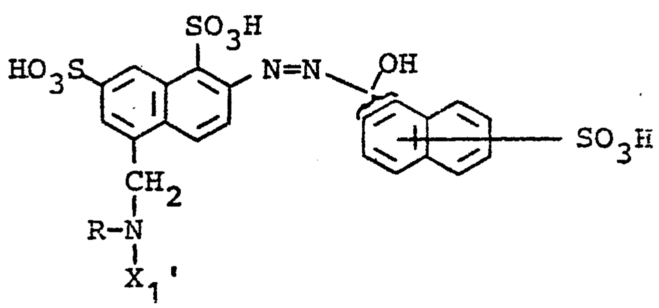

dans laquelle

R = hydrogène, reste alkyle en $C_1$ à $C_4$,

$X_1'$ = reste halogénotriazinyle, trichloropyrimidinyle, dichloropyrimidinyle, monofluoromonochloropyrimidinyle, monofluoropyrimidinyle.

3. Colorants de formule

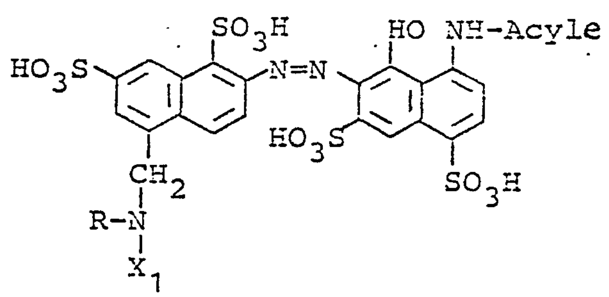

dans laquelle

R et $X_1$ ont la définition indiquée dans la revendication 1 et acyle est le reste d'un composant acylique.

4. Colorants de formule

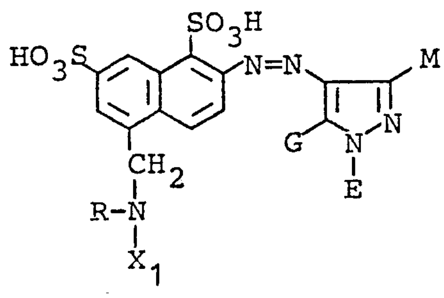

dans laquelle

R et $X_1$ ont la définition indiquée dans la revendication 1,

E est un reste alkyle, phényle ou naphtyle substitué par au moins un groupe hydrosolubilisant, en particulier un groupe acide sulfonique,

M est un groupe méthyle, carboxy ou carbonamido et

G est un groupe OH ou $NH_2$.

5. Colorants de formule

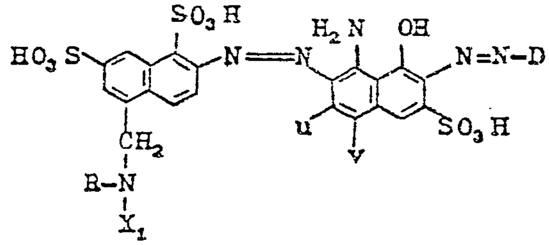

dans laquelle

R et $X_1$ ont la définition indiquée dans la revendication 1,

u et v désignent de l'hydrogène ou un groupe acide sulfonique, u étant différent de v et

D est le reste d'un composant diazotable de la série du benzène ou du naphtalène.

6. Colorants de formule

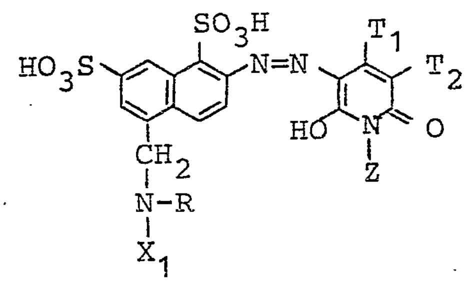

dans laquelle

R a la définition indiquée dans la revendication1,

$T_1$ = hydrogène, reste alkyle, aralkyle, cycloalkyle, aryle, hétéro-aryle éventuellement substitué, un groupe de formule —CN, —$CONR_1R_2$, —$COR_1$ ou —OH,

$R_1$ et $R_2$ désignant chacun, indépendamment l'un de l'autre, de l'hydrogène, un reste alkyle, aralkyle, cycloalkyle, aryle ou hétéro-aryle éventuellement substitué, ou bien

le groupe —$NR_1R_2$ est le reste d'un composé hétérocyclique à noyau pentagonal ou hexagonal et

$T_2$ = hydrogène, reste alkyle, aralkyle, cycloalkyle, aryle, hétéro-aryle éventuellement substitué, un groupe sulfo, un groupe nitro, un groupe nitroso, un groupe alkylsulfonyle, un groupe arylsulfonyle ou un groupe acylamino, un atome d'halogène tel que chlore, brome ou fluor, un groupe de formule —CN, —$CONR_1R_2$ ou —$COR_1$,

où

$R_1$ et $R_2$ ont la définition indiquée ci-dessus,

Z = hydrogène, reste alkyle, aralkyle, cycloalkyle, aryle ou hétéro-aryle éventuellement substitué,

et où

$X_1$ = un reste de la série aminomonochlorotriazinyle, alkylaminomonochlorotriazinyle, arylaminomonochlorotriazinyle, alkoxymonochlorotriazinyle, aminomonofluorotriazinyle, alkylaminomonofluorotriazinyle, arylaminomonofluorotriazinyle, dichlorotriazinyle, monohalogénopyrimidinyle, dihalogénopyrimidinyle, trihalogénopyrimidinyle, 2,3-dichloroquinoxaline-6-carbonyle.

7. Utilisation des colorants suivant les revendications 1 à 6 pour la teinture et l'impression de matières portant des groupes hydroxyle et amido.

**Revendications** (pour l'Etat contractant IT)

1. Colorants de formule

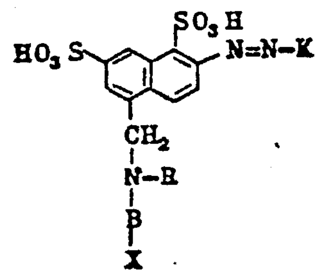

dans laquelle

R = hydrogène, reste alkyle en $C_1$ à $C_4$,
B = liaison directe ou chaînon ponté,
X = reste d'un composant réactif,
K = reste d'un copulant.

2. Colorants de formule suivant la revendication 1, dans laquelle R, B et K ont la définition qui y est indiquée et X désigne le reste d'un composant réactif de la série halogénotriazinyle, tri- ou dihalogénopyrimidinyle ou monofluoropyrimidinyle.

3. Colorants de formule

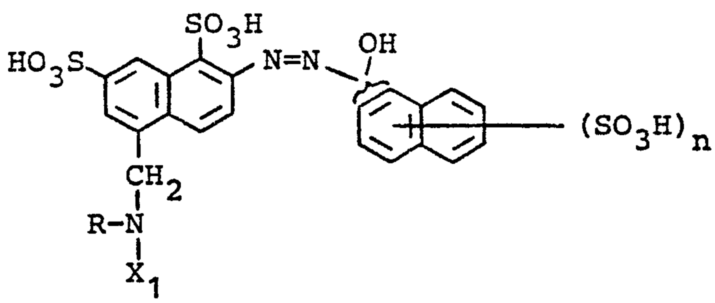

dans laquelle

R = a la définition indiquée dans la revendication 1,
$X_1$ = reste d'un composant réactif, et
n = 1, 2 ou 3.

4. Colorants de formule

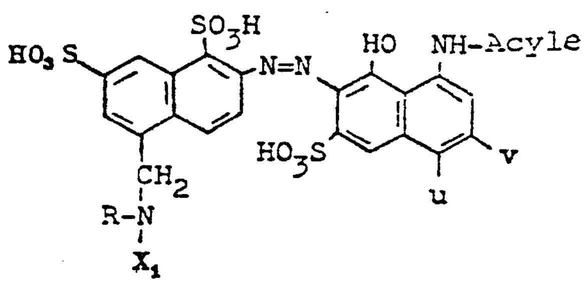

dans laquelle

B et $X_1$ ont la définition donnée dans la revendication 1 ou 2,
u et v désignent de l'hydrogène ou un groupe acide sulfonique, u étant différent de v, et
acyle désigne le reste d'un composant acylique.

5. Colorants de formule

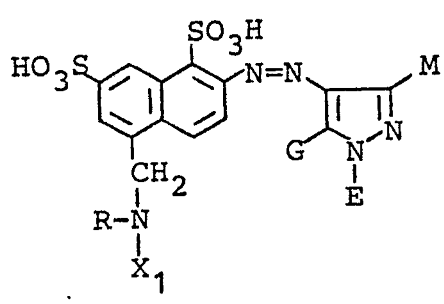

dans laquelle

R et $X_1$ ont la définition indiquée dans la revendication 1 ou 2,

E désigne un reste alkyle, phényle ou naphtyle substitué par au moins un groupe hydrosolubilisant, notamment un groupe acide sulfonique,

M est un groupe méthyle, carboxy ou carbonamido, et

G est un groupe OH ou $NH_2$.

6. Colorants de formule

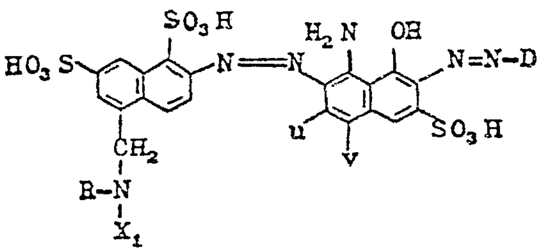

dans laquelle

R, $X_1$, u et v ont la définition donnée dans la revendication 1 ou 2 ou 3, et

D désigne le reste d'un composant diazotable de la série du benzène ou du naphtalène.

7. Colorants de formule

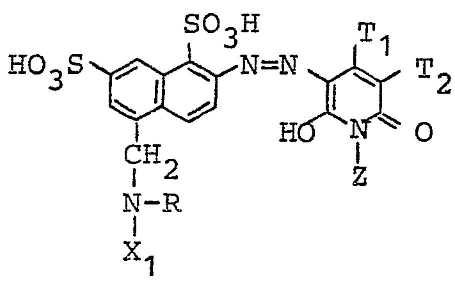

(VI)

dans laquelle

R et $X_1$ ont la définition indiquée,

$T_1$ = hydrogène, reste alkyle, aralkyle, cycloalkyle, aryle, hétéro-aryle éventuellement substitué, un groupe de formule —CN, —$CONR_1R_2$, —$COR_1$ ou —OH,

$R_1$ et $R_2$ désignant chacun, indépendamment l'un de l'autre, de l'hydrogène, un reste alkyle, aralkyle, cycloalkyle, aryle ou hétéro-aryle éventuellement substitué, ou bien

le groupe —$NR_1R_2$ désigne le reste d'un composé hétérocyclique à noyau pentagonal ou hexagonal et

$T_2$ = hydrogène, reste alkyle, aralkyle, cycloalkyle, aryle, hétéro-aryle éventuellement substitué, un groupe sulfo, un groupe nitro, un groupe nitroso, un groupe alkylsulfonyle, un groupe arylsulfonyle ou un groupe acylamino, un atome d'halogène tel que le chlore, le brome ou le fluor, un groupe de formule —CN, —$CONR_1R_2$ ou —$COR_1$,

Z = hydrogène, reste alkyle, aralkyle, cycloalkyle, aryle ou hétéro-aryle éventuellement substitué.

8. Procédé de production des colorants suivant la revendication 1, caractérisé en ce qu'il consiste à diazoter des amines de formule

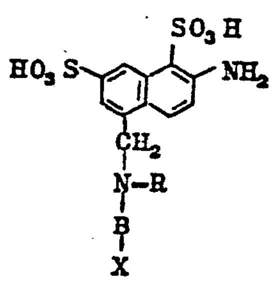

dans laquelle

B, R et X ont la définition indiquée dans la revendication 1 et à les combiner avec des copulants de formule H—K

dans laquelle

K a la définition indiquée dans la revendication 1.

9. Utilisation de colorants suivant les revendications 1 à 6, pour la teinture et l'impression de matières portant des groupes hydroxyle et amido.